# EUROPEAN PATENT APPLICATION

(11) **EP 4 801 004 A1**
(43) Date of publication of application: **02.09.2026**
(21) Application number: 26161463.0
(22) Date of filing: 27.02.2026
(51) Int. Cl.: H04L 45/24, H04L 47/125, H04L 45/50

(54) **MULTIPATH TRAFFIC ENGINEERING**

(30) Priority: 28.02.2025 US 202563765455 P; 07.07.2025 US 202563839853 P; 23.02.2026 US 202619547457
(71) Applicant: Juniper Networks, Inc., Sunnyvale, CA 94089-1206 (US)
(72) Inventor: Kompella, Kireeti, Sunnyvale, 94089-1206 (US)
(74) Representative: Marks & Clerk LLP

(57) **Abstract**

Techniques are described for multipath traffic engineering (MPTE). In an example, computer-readable storage media comprises instructions for causing one or more processors of a network node to: obtain data associating a first incoming link, a second incoming link, a share of outgoing bandwidth for a first outgoing link, and a share of outgoing bandwidth for a second outgoing link; and forward, based on the data, incoming network traffic received at the network node on the first incoming link and incoming network traffic received at the network node on the second incoming link via the first outgoing link according to the share of outgoing bandwidth for the first outgoing link and via the second outgoing link according to the share of outgoing bandwidth for the second outgoing link.

## Description

### MULTIPATH TRAFFIC ENGINEERING

This application claims the benefit of US Patent Application No. 19/547,457, filed 23 February 2026; US Provisional Patent Application No. 63/839,853, filed 7 July 2025; and US Provisional Patent Application No. 63/765,455, filed 28 February 2025; the entire content of each application is incorporated herein by reference.

### BACKGROUND

**Traffic** engineering (TE) in a network optimizes the routing of traffic to improve network efficiency, performance, and reliability. Traffic engineering improves utilization of available bandwidth, avoids congestion, and enhances Quality of Service (QoS). A TE network can have link attributes such as bandwidth, colors, risk groups, and alternate metrics. A TE path from one ingress node to one egress node can be computed based on these attributes to include or avoid certain links, increase path diversity, manage bandwidth reservations, improve service experience, and offer protection paths (often termed "constraints"). Thus, traffic engineering involves identifying and steering a traffic trunk through a pre-defined path that meets the constraints instead of relying strictly on shortest-path routing. To create a traffic engineering path, a path computation device such as a path computation element (PCE) or an ingress node computes a path based on constraints and then uses protocols such as Resource Reservation Protocol (RSVP) to distribute forwarding state such as labels among the nodes to cause the nodes to implement the computed path. Traffic engineering can be used in conjunction with ECMP, with an ingress node load balancing traffic across multiple traffic engineering paths from the ingress node to the egress node. However, non-ingress nodes in the various paths have only a single path to the egress node.

### SUMMARY

Particular aspects are set out in the appended independent claims. Various optional embodiments are set out in the dependent claims.

### BRIEF DESCRIPTION OF DRAWINGS

FIG. 1 is a block diagram illustrating an example network system that implements example multipath traffic engineering (MPTE) techniques in accordance with one or more aspects of this disclosure.
FIGS. 2A-2B are block diagrams illustrating nodes of the network of FIG. 1 and a multipath traffic engineering directed acyclic graph (MPTED), in accordance with one or more aspects of this disclosure.
FIG. 3 is a diagram illustrating a more complicated network with nodes, in which example MPTE techniques are implemented in accordance with one or more aspects of this disclosure.
FIG. 4 is a block diagram illustrating an example router that implements example MPTE techniques in accordance with one or more aspects of this disclosure.
FIG. 5 is a flowchart illustrating an example operation of a system, in accordance with one or more aspects of this disclosure.
FIG. 6A is flowchart illustrating an example operation of a node, in accordance with one or more aspects of this disclosure.
FIG. 6B is flowchart illustrating an example operation of a system, in accordance with one or more aspects of this disclosure.
FIG. 7 is a block diagram illustrating an example network system that implements example MPTE techniques in accordance with one or more aspects of this disclosure.
FIG. 8 is a block diagram illustrating an example network system that implements example MPTE techniques in accordance with one or more aspects of this disclosure.
FIG. 9 is a table listing differences between RSVP for MPTE and conventional RSVP.
FIGS. 10A-10D are block diagrams illustrating example network systems that implement example multipath traffic engineering (MPTE) techniques in accordance with one or more aspects of this disclosure.
FIG. 11 is a table listing differences between PCEP for MPTE and conventional PCEP.
FIG. 12 is a block diagram illustrating an example network system in which junction provisioning is performed using an MPTE Directed Acyclic Graph (MPTED) data model, in accordance with one or more aspects of this disclosure.
FIG. 13 is a block diagram illustrating nodes of a network and an MPTED, in accordance with one or more aspects of this disclosure.
FIGS. 14A-14C are block diagrams illustrating nodes of a network and an MPTED, in accordance with one or more aspects of this disclosure.
FIG. 15 is a block diagram illustrating an example controller, in accordance with one or more aspects of this disclosure.
FIG. 16 is a block diagram illustrating an example message format for providing junction data to a junction node, in accordance with one or more aspects of this disclosure.
FIG. 17 is a block diagram illustrating an example message format for providing a label, in accordance with one or more aspects of this disclosure.
FIG. 18 is a flowchart illustrating an example mode of operation for a signaling source, in accordance with one or more aspects of this disclosure.

Like reference characters denote like elements throughout the figures and text.

### DETAILED DESCRIPTION

In general, this disclosure describes techniques for multipath traffic engineering (MPTE). In some examples, a path computation system uses network topology data of a network of nodes to compute, using a shortest-path algorithm and in some cases based on operator-specific constraints, a Directed Acyclic Graph (DAG). Edges of the DAG correspond to links of the network that make up paths from one or more ingress nodes of the network to one or more egress nodes of the network. Nodes of the DAG correspond to one or more nodes of the network. The set of paths along links interconnecting the nodes from the one or more ingress nodes to the one or more egress nodes, computed as the DAG, is referred to as an MPTE DAG (or "MPTED"). The path computation system may apply a maximum flow ("max flow") algorithm to the DAG to determine, based on the available bandwidth of each of the links in the DAG, the maximum amount of flow that can be sent from the one or more ingress nodes to the one or more egress nodes. The path computation system uses the results of the max flow algorithm to determine, for each node that has one or more outgoing links on the MPTED, respective shares of the incoming bandwidth (i.e., the incoming traffic with the bandwidth) for the MPTED to the node to send on the one or more outgoing links of the node. Such nodes are non-egress nodes of the MPTED. An MPTED includes two or more junction nodes (or more simply, "junctions"). The nodes of the MPTED route and load balance packets of a traffic trunk to implement the MPTED accordingly.

The path computation system may send, to a junction node, junction data that indicates the respective shares of the incoming bandwidth of the traffic trunk that the junction node is to send on the one or more outgoing links of the junction node. The junction node creates forwarding state based on this junction data and load balances the incoming bandwidth of the traffic trunk via its one or more outgoing links according to the respective shares. The path computation system may signal the corresponding junction data directly to each of the junction nodes of the MPTED. In addition, this technique may increase the number of next hops at a given node, improving load balancing at that node and increasing the overall resilience of the DAG.

In some examples, the path computation system may compute a DAG using a quantity of "slack," which may be expressed in terms of the minimum path length (i.e., shortest path). Thus, rather than requiring that the DAG be made up of strictly shortest paths, the path computation algorithm may permit paths within some quantity of slack of the shortest path, resulting in a non-equal-cost multipath (nECMP) for the DAG (i.e., the MPTED). This technique may increase the number of acceptable paths and thus the amount of bandwidth for a traffic trunk that can be transported using the MPTED.

In some examples, the operator may specify multiple egress nodes for the DAG, and the path computation system may compute the DAG from the one or more ingress nodes to the multiple egress nodes. In some examples, the operator may specify multiple ingress nodes for the DAG, and the path computation system may compute the DAG from the multiple ingress nodes to the one or more egress nodes. These techniques may increase the amount of bandwidth that can be transported for a traffic trunk using the MPTED generated from the DAG and output from the network and may also allow for reduced control and data plane state due to state sharing. These techniques can also improve resilience of the traffic trunk by providing alternate egress nodes.

The techniques of this disclosure may provide one or more technical advantages that result in one or more practical applications. For example, the techniques may enable provisioning a MPTED into a network of nodes to transport a traffic trunk in manner that leverages the advantages of both traffic engineering and multipath. Use of the DAG and max flow algorithms by the path computation system to determine the respective shares of incoming bandwidth of a traffic trunk for each junction node ensures that these respective shares account for downstream capacity. Put another way, rather than each junction node independently computing an equal-cost multipath for its downstream paths to an egress node and distributing the bandwidth using conventional EMCP load balancing, the path computation system may compute a DAG that is network-wide and may process this network-wide DAG using max flow (with the available bandwidth of the links of the DAG as input) to determine corresponding shares at each of the junction nodes of the MPTED. The techniques may thus effectively combine the explicit path computation advantages of traffic engineering with the reduced state and generally greater bandwidth and greater resilience of multipathing. As another example, implementing the MPTED at each junction node using corresponding junction data that indicates the respective shares of incoming bandwidth of a traffic trunk for each junction node may enable reduced data plane state versus computing and signaling multiple traffic engineering paths in the network.

In some examples, a network system may implement one or more signaling protocols for signaling a multipath unicast tunnel (MPTE tunnel) across an MPTED. An MPTE tunnel is a TE construct that facilitates weighted load balancing of unicast traffic across a constrained set of paths representing the MPTED and which may be optimized for specific objective(s). In other words, the MPTE tunnel is the signaled entity that carries the traffic from the one or more ingress nodes to the one or more egress nodes along the MPTED. The paths that make up an MPTE tunnel traverse a set of junction nodes, and the state associated with the MPTED at each junction node constitutes a set of previous-hops and a set of next hops over which traffic is load balanced equally or unequally. An MPTE tunnel may be realized over a Multiprotocol Label Switching (MPLS) forwarding plane or a native Internet Protocol (IP) v4/v6 forwarding plane using an appropriate tunnel type. A centralized or a distributed approach may be adopted for provisioning an MPTE tunnel. "MPTED" and "MPTE tunnel" can be used interchangeably in this disclosure.

Provisioning an MPTE tunnel in a TE network using a signaling protocol involves provisioning control and forwarding plane state at each junction node. The network system can create, update, or delete an MPTED. Example signaling protocols described herein include extensions to Resource Reservation Protocol (RSVP); Path Computation Element Protocol (PCEP); or Border Gateway Protocol (BGP), BGP-TE, other TCP-based protocol; and other protocols by which a controller can provision forwarding information for an MPTE tunnel to junction nodes using a data model.

In an example, a system comprises: computer-readable storage media storing instructions; and processing circuitry having access to the computer-readable storage media and configured to execute the instructions to: compute, for a network of nodes interconnected by one or more links, a directed acyclic graph, wherein edges of the directed acyclic graph correspond to links of the one or more links that make up paths from an ingress node of the nodes to an egress node of the nodes; apply a max flow algorithm to the directed acyclic graph to determine a share of outgoing bandwidth for a first link and a share of outgoing bandwidth for a second link, wherein the first link and the second link are of the links corresponding to the edges of the directed acyclic graph; and output data indicating the share of outgoing bandwidth for the first link and the share of outgoing bandwidth for the second link, wherein the data causes a particular node to forward network traffic received at the particular node according to the share of outgoing bandwidth for the first link and the share of outgoing bandwidth for the second link.

In an example, a network node comprises computer-readable storage media storing instructions; and processing circuitry having access to the computer-readable storage media and configured to execute the instructions to: obtain data associating a first incoming link, and a second incoming link, a share of outgoing bandwidth for a first outgoing link, and a share of outgoing bandwidth for a second outgoing link; and forward, based on the data, incoming network traffic received on the first incoming link and incoming network traffic received on the second incoming link via the first outgoing link according to the share of outgoing bandwidth for the first outgoing link and via the second outgoing link according to the share of outgoing bandwidth for the second outgoing link.

In an example, computer-readable storage media comprises instructions for causing one or more processors of a system to: apply a max flow algorithm to a directed acyclic graph, computed for a network of nodes interconnected by one or more links, to determine a share of outgoing bandwidth for a first link and a share of outgoing bandwidth for a second link, wherein the first link and the second link correspond to edges of the directed acyclic graph; and output data indicating the share of outgoing bandwidth for the first link and the share of outgoing bandwidth for the second link, wherein the data causes a particular node in the network of nodes to forward network traffic received at the particular node according to the share of outgoing bandwidth for the first link and the share of outgoing bandwidth for the second link.

In an example, computer-readable storage media comprises instructions for causing one or more processors of a network node to: obtain data associating a first incoming link, a second incoming link, a share of outgoing bandwidth for a first outgoing link, and a share of outgoing bandwidth for a second outgoing link; and forward, based on the data, incoming network traffic received at the network node on the first incoming link and incoming network traffic received at the network node on the second incoming link via the first outgoing link according to the share of outgoing bandwidth for the first outgoing link and via the second outgoing link according to the share of outgoing bandwidth for the second outgoing link.

The details of one or more aspects of this disclosure are set forth in the accompanying drawings and the description below. Other features, objects, and advantages will be apparent from the description and drawings, and from the claims.

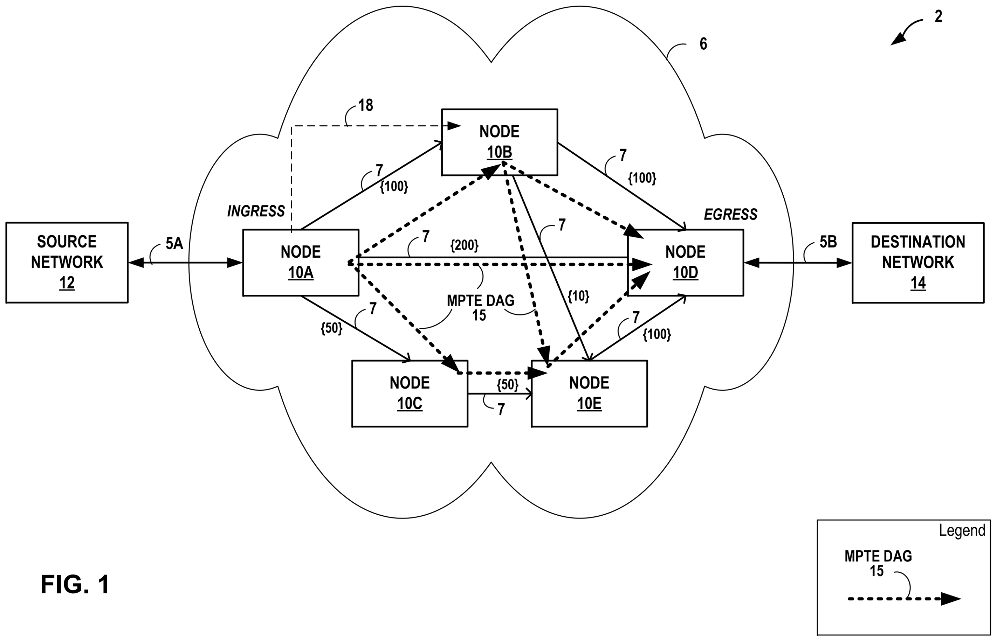

FIG. 1 is a block diagram illustrating an example network system 2 that implements example multipath traffic engineering (MPTE) techniques in accordance with one or more aspects of this disclosure. Network 6 is a layer 3 network that includes nodes 10A-10E ("nodes 10") that route network packets, received from source network 12 on one or more links 5A, from ingress node 10A to egress node 10D, which forwards the network packets on one or more links 5B toward destination network 14. Network 6 may represent a public network, such as the Internet, a private network, such as those owned and operated by an enterprise or service provider, or a combination of both public and private networks. As a result, network 6 may be alternately referred to herein as a Service Provider (SP) network. Network 6 may alternatively represent a data center network (DCN) that transports packets within a data center among, e.g., compute and storage nodes and Graphics Processing Units (GPUs) located in the data center and to/from nodes external to the data center. Network 6 may alternatively represent another type of layer 3 network. Network 6 may include one or more Wide Area Networks (WANs), Local Area Networks (LANs), Data Center Interconnections (DCls), Virtual Local Area Networks (VLANs), Virtual Private Networks (VPNs) including Ethernet VPNs, and/or another type of network.

In some instances, network 6 may be an Internet Protocol network in which nodes 10 use IP forwarding for transporting network packets. In some instances, network 6 may also be a label switching network in which network devices such as nodes 10, often referred to as Label Switching Routers (LSRs), establish label switched paths (LSPs) to transport network packets using Multiprotocol Label Switching (MPLS) techniques. The network devices may receive the network packets from source network 12. The MPLS data-carrying mechanism of network 6 may be viewed as laying between layer 2 and layer 3 of the Open Systems Interconnection (OSI) model and is often referred to as a layer 2.5 protocol. Reference to layers followed by a numeral may refer to a particular layer of the OSI model or TCP/IP model. In some instances, network 6 may offer Generalized MPLS (GMPLS). Although described herein in some instances with respect to MPLS, the techniques of this disclosure are also applicable to GMPLS.

Thus, although shown as a single network 6 in FIG. 1, network 6 may comprise any number of interconnected networks, either public or private. In addition, network 6 may include a variety of other network devices for forwarding network traffic, such as additional routers, switches, or bridges. The particular configuration of network system 2 is merely an example, and nodes 10 may reside in a single network or within multiple networks.

Each of nodes 10 may be a router, layer 3 switch, core or edge router, virtual router, Software Defined Wide Area Network (SD-WAN) device, firewall device, gateway, wireless controller with layer 3 routing capabilities, or other device that forwards packets using layer 3 forwarding.

In the example of FIG. 1, network system 2 includes source network 12 and destination network 14 coupled to network 6. Each of source network 12 and destination network 14 may include one or more devices that transmit and receive packets and are capable of interfacing with and communicating over network 6. Such devices may include compute nodes or components thereof, graphics processing units (GPUs and XPUs), storage nodes or components thereof, personal computers, laptop computers, mobile telephones, a television set-top box, a network device integrated into a vehicle, a video game system, a point-of-sale device, a personal digital assistant, an intermediate network device, a network appliance, a supercomputer, a mainframe computer, etc. Source network 12 may be a content delivery network (CDN), data center network, public cloud, private cloud, on-premises data center, etc.

Communication links 5A-5B and communication links 7 of network may be wired and/or wireless communication links. Communication links 7 interconnect nodes 10 in a network topology to facilitate control and data communication among the routers. The term "communication link," as used herein, comprises any form of transport medium, wired or wireless, and can include intermediate nodes such as network devices. Communication links (or more simply "links") may include, for example, Ethernet, Synchronous Optical Networking (SONET)/Synchronous Digital Hierarchy (SDH), Lambda, optical fiber, and/or other links that transport packets from one of nodes 10 to another of nodes 10. One or more of communication links 5 or communication links 7 may include logical links, such as an Ethernet Virtual LAN, an MPLS LSP, or an MPLS-TE LSP. Communication links 7 may be point-to-point. Although shown as unidirectional, communication links 7 may be bidirectional.

Nodes 10 employ one or more interior gateway protocols (IGPs) to learn link states/metrics for communication links 7 of network 6. For example, node 10A may use an Open Shortest Path First (OSPF) or Intermediate System-Intermediate System (IS-IS) to exchange routing information with nodes 10B-10E. Node 10A stores the routing information to a routing information base (RIB) that the router uses to compute routes to destination prefixes advertised within network 6. Metrics are shown next to communication links 7 in FIG. 1 using the notation {x} where x is the metric. For example, the link from node 10A to node 10B has metric 100.

In some instances, nodes 10 may support equal-cost multipath (ECMP) routing techniques. ECMP allows multiple next hop paths to be used simultaneously when the paths have the same cost metric. This improves network efficiency, enhances load balancing, and provides redundancy without requiring complex configurations. When a node learns multiple paths to the same destination with equal cost (e.g., via OSPF, IS-IS, or BGP), the node can install multiple paths into the routing table. Instead of using only one path (as traditional routing does), the node using ECMP distributes traffic across respective next hops for the multiple paths. Weighted ECMP (W-ECMP) involves assigning different weights to paths based on available bandwidth. The node using W-ECMP distributes more traffic across respective next hops for paths with higher-bandwidth outgoing links as compared to paths with lower-bandwidth outgoing links.

In some instances, nodes 10 may support traffic engineering (TE) techniques to improve the utilization of paths through network 6. In general, traffic engineering refers to operations to move traffic flow away from the shortest path computed by an interior gateway protocol for network 6 and toward a potentially less congested or otherwise more desirable (from an operational point of view) physical path across the network. For example, a network 6 administrator or nodes 10 may establish, using Resource Reservation Protocol with Traffic Engineering extensions (RSVP-TE) or another label distribution protocol used for Traffic Engineering, one or more LSP tunnels that connect various pairs of nodes 10 to route network traffic away from network failures, congestion, and bottlenecks. A node that includes an interface to the LSP tunnel associates a metric with the LSP. An LSP metric may assume the metric of the underlying IP path over which the LSP operates or may be configured by an administrator of network 6 to a different value to influence routing decisions by nodes 10. Nodes 10 execute the interior gateway protocols to communicate via routing protocol messages and exchange metrics established for the LSP tunnels and store these metrics in a Traffic Engineering database (TED) for use in computing routes to destination addresses advertised within network 6. For example, nodes 10 may advertise LSP tunnels as IGP links of network 6 using OSPF or IS-IS forwarding adjacencies (FAs). As used herein, therefore, the term "link", "communication link", or traffic engineered (TE) path may also refer to an LSP operating over one or more communication links 7.

In general, RSVP-TE-established LSPs reserve resources using path state on nodes of a network to ensure that such resources are available to facilitate a class of service (CoS) for network traffic forwarded using the LSPs. The nodes must maintain the reserved amount of bandwidth for network traffic mapped to the LSP until the LSP is either preempted or torn down. Bandwidth of a link that has not been reserved is residual bandwidth for the link.

Available bandwidth for a link is an amount of bandwidth for the link that is available for use in forwarding additional traffic. In some cases, available bandwidth for a link may correspond to a configured bandwidth for the link that is not already explicitly reserved and/or in use for forwarding traffic. In some cases, available bandwidth for a link may be a "maximum link bandwidth." The maximum link bandwidth defines a maximum amount of available bandwidth associated with a network link. As another example, available bandwidth for a link may be a "residual bandwidth," i.e., the maximum link bandwidth less the bandwidth currently reserved by operation of a resource reservation protocol, such as being reserved to RSVP-TE LSPs. This is the bandwidth available on the link for non-RSVP traffic. Residual bandwidth changes based on control-plane reservations. As a further example, the link bandwidth may be a "currently available bandwidth". The currently available bandwidth is the residual bandwidth less measured bandwidth used to forward non-RSVP-TE packets. In other words, the currently available bandwidth for a network link that transports traffic outbound from a network device defines an amount of available bandwidth for the network link that is neither reserved by operation of a resource reservation protocol nor currently being used by the network device to forward traffic using unreserved resources. Nodes 10 may exchange link bandwidth information in Interior Gateway Protocol with Traffic Engineering extensions (IGP-TE) advertisements.

Nodes 10 may measure the amount of bandwidth in use to transport IP and labeled packets over outgoing links and compute currently available bandwidth as a difference between the maximum link bandwidth and the sum of reserved bandwidth and measured IP/labeled packet bandwidth or may compute reserved bandwidth as described above. Nodes 10 exchange computed available bandwidth information for their respective one or more outgoing links as link attributes in extended link-state advertisements of a link-state interior gateway protocol and store received link attributes to their respective Traffic Engineering Databases (TEDs) (not shown in FIG. 1) that are distinct from the routing information base (including, e.g., the IGP link-state database). In general, a TED may store topology data for a path computation domain (i.e., network 6 in FIG. 1). Such topology data includes, for each of communication links 7 in the network, one or more of the link state, administrative attributes (e.g. colors), shared risk information, and metrics such as available bandwidth for use at various LSP priority levels of communication links interconnecting the nodes of the path computation domain.

A path computation system may compute paths in network 6 using topology data for network 6. A path is a set of one or more communication links 7 that proceeds from a start node 10 of the path to an end node 10 of the path. For example, a path may include Node 10A to Node 10B via a communication link, denoted as path {10A, 10B}. As another example, a path may include Node 10A to Node 10B via a communication link and Node 10B to Node 10E via another communication link, denoted as path {10A, 10B, 10E}.

In accordance with techniques of this disclosure, a path computation system performs multipath traffic engineering (MPTE) to compute and provision paths in network 6 for a traffic trunk. As used herein, a "traffic trunk" is a unidirectional aggregate of traffic flows from an ingress to a set of egresses that is treated identically in the data plane (also known as the forwarding plane) of nodes 10. Packets belonging to a traffic trunk may be identified by nodes 10 using properties of the packet, which can include one or more of packet header information, a label, or payload data. The path computation system may alternatively be referred to as an "MPTED computer" (MC). The path computation system can include any of nodes 10 (typically one of the ingress nodes) or a separate computing system (not shown in FIG. 1). The separate computing system may be a path computation element (PCE), a network controller, WAN controller, software-defined networking (SDN) controller, a router other than one of nodes 10, a network optimization and planning tool, an SD-WAN edge device, an SD-WAN controller, or other system for computing paths in a network.

For example, the path computation system may use topology data of network 6 of nodes 10 to compute, using a shortest-path algorithm and in some cases based on operator-specific constraints, a Directed Acyclic Graph (DAG) from ingress node 10A to egress node 10D. The set of computed paths along links interconnecting the nodes from the one or more ingress nodes to the one or more egress nodes, as represented by the DAG, is referred to as an MTPE DAG (MPTED) and is illustrated in FIG. 1 as MPTED 15. An MPTE is a multipath TE with path constraints (which may include slack) using equal or non-equal ECMP (nECMP) paths from ingress node 10A to one or more egress nodes (here, egress node 10D). An MPTED results from CSPF-type computation on MPTE constraints. Although only one ingress node 10A and one egress node 10D is described for this example, MPTED 15 can have one or more ingress nodes and one or more egress nodes.

**An** operator or other system may specify an MPTED by defining several parameters. These parameters include a non-empty set of ingress nodes and a non-empty set of egress nodes. The parameters further include the particular metric to be used for path calculation and, optionally, an associated slack value. The parameters optionally include path constraints for the MPTED. The parameters further include an indication of whether the MPTED is configured as a strict graph or a loose graph.

An MPTED is strict if all paths from all ingress nodes to all egress nodes are within slack of the shortest path. An MPTED is loose if all paths from a given ingress node I to a given egress node E are within slack of each other, but paths from I to a different egress node F may not be within slack of the paths to E.

Links of MPTED 15 include the following communication links 7: the outgoing link from 10A to 10B, denoted {10A, 10B}, {10A, 10D}, {10A, 10C}, {10B, 10D}, {10B, 10E}, {10C, 10E}, and {10E, 10D}. A node has a corresponding outgoing interface (oif) for each outgoing link of the node. A link between nodes u and v can be denoted by (u, v, i), where i is u's oif for the link.

The shortest-path algorithm may include Dijkstra (shortest-path first), Bellman-Ford, Floyd-Warshall, A-Star Algorithm, Constrained Shortest Path First (CSPF) (a variation on Dijkstra that considers additional constraints), Yen's k-Shortest Paths, Johnson's algorithm, or Ant Colony Optimization (ACO). Metrics for the shortest-path algorithm define the cost for a path and may include one or more of hop count, bandwidth, latency, jitter, packet loss, reliability, cost (a calculated metric based on link bandwidth, delay, and/or other factors), etc., or a combination of the above.

In some examples, the path computation system computes the DAG using CSPF in which computed paths are subject to one or more constraints. Such constraints may include administrative groups (include/exclude), shared risk link groups (SRLGs), shared risk resource groups, latency, jitter, hop count, administrative policies, exclusion constraints (link/node avoidance), link utilization constraints, and security constraints, etc. Notably, however, path computation system should not include available bandwidth as a constraint. Consequently, end-to-end paths of MPTED 15 may include links having available bandwidth that is less than the amount of bandwidth required for a traffic trunk. However, the aggregate bandwidth of MPTED 15 may satisfy the bandwidth required for the traffic trunk.

As described in further detail below, nodes 10 store forwarding state to implement MPTED 15 to transport traffic for a traffic trunk on links of MPTED 15 from ingress node 10A toward egress node 10D. End-to-end paths made up of these links include {10A, 10B, 10D}, {10A, 10B, 10E, 10D}, {10A, 10D}, {10A, 10C, 10E, 10D} and are collectively referred to as "end-to-end paths of MPTED 15". These may be equal-cost or non-equal cost multipaths.

MPTED 15 includes two or more junction nodes (or more simply as "junctions"). Nodes 10 in FIG. 1 are junction nodes and may alternatively be referred to as junction nodes 10. A junction node can be one of five types:
- a pure ingress node has zero incoming links and one or more outgoing links in the MPTED. Traffic routed on a MPTED enters at the ingress;
- a pure egress node has one or more incoming links and zero outgoing links in the MPTED. Traffic routed on a MPTED leaves at an egress;
- a transit ingress node where traffic can either enter the MPTED or arrive from another ingress node to continue on in the MPTED;
- a transit egress node where traffic can either exit the MPTED or go on to another egress node; or
- a "regular" junction node has one or more incoming links and one or more outgoing links. Traffic does not enter or leave the MPTED at such a node. Traffic comes from a phop and goes to an nhop.

Node 10A, for instance, is a pure ingress junction node having three outgoing links of MPTED 15 to nodes 10B, 10D, and 10C, respectively. Node 10D is a pure egress junction node having incoming links of MPTED 15. Nodes 10B, 10C, and 10E are regular junction nodes.

A junction node v consists of v, a set of zero or more previous hops (phops), and a set of zero or more next hops (nhops). A phop may be specified by an incoming link of v: (u, v, oif1); an nhop may be specified by an outgoing link of v: (v, w, oif2). Because links are point-to-point, it may be sufficient to specify (u, oif1) for a phop and (v, oif2) for a nhop. The node u may be referred to as a previous hop (phop) node of v (strictly speaking the phop also includes an incoming link of v), and the node w may be referred to as a nhop of v. A pure ingress junction node has no phops and a pure egress junction node has no nhops.

A node may be identified by its IPv4/IPv6 loopback address. A link from node u to node v is identified by u's loopback address and its outgoing interface index (oif), a unique identifier for the link allocated by u. A link may also be identified by an IPv4 or IPv6 interface address. Nodes may use IGP-TE to exchange information describing oifs. An MPTED may be identified by a unique identifier (MPTED ID or MID) assigned to the MPTED by the path computation system. An MPTED may be assigned a version number starting at 0, which is incremented when the MPTED is recomputed. The full MPTED ID (the FID) may thus consist of <MC, MID, version>.

Having determined MPTED 15, the path computation system may apply a max(imum) flow algorithm to the DAG to determine, based on the available bandwidth of each of the links in the DAG, the maximum amount of flow that can be sent from ingress node 10A to egress node 10D. The max flow algorithm may include Ford-Fulkerson, Edmonds-Karp, Dinic's, Push-Relabel, or Capacity Scaling, for instance. Again, in some examples, there may be multiple egress nodes.

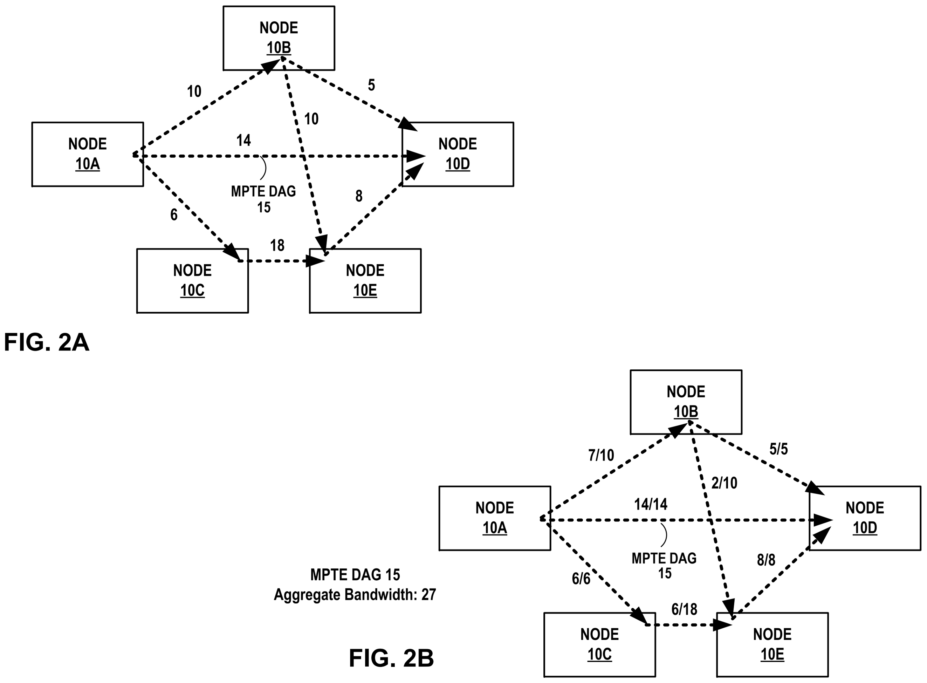

The path computation system uses the results of the max flow algorithm and, in particular, the flow values for each link to determine, for each of nodes 10 that has one or more outgoing links on MPTED 15, respective shares of the incoming bandwidth for MPTED 15 to the node that the node is to send on the one or more outgoing links of the node. The junction nodes of MPTED 15 route and load balance packets of a traffic trunk over the computed MPTED 15 accordingly. This is illustrated and described more fully with respect to FIGS. 2A-2B. Although bandwidth is a capacity or rate, as used herein, incoming bandwidth for MPTED 15 refers to packets received at a node and that are forwarded (or are to be forwarded) based on MPTED 15. The term "incoming traffic", "incoming network packets", or "incoming packets" may also be used to refer to such packets. Outgoing bandwidth for MPTED 15 at a node refers to packets that the node forwards (or is to forward) based on MPTED 15. The term "outgoing traffic", "outgoing network packets", or "outgoing packets" may also be used to refer to such packets.

The path computation system may therefore specify a junction node v by bandwidth entering and exiting v, a list of phops of v, and a list of nhops of v with indications of respective splits for accomplishing load balancing at v for the bandwidth.

The path computation system may send, to junction nodes 10 of MPTED 15, junction data that indicates the respective shares of the incoming bandwidth of the traffic trunk that the junction node is to send on the one or more outgoing links of the junction node. Each of junction nodes 10 creates forwarding state based on its corresponding junction data for MPTED 15 and load balances the incoming bandwidth of the traffic trunk via its one or more outgoing links of MPTED 15 according to the specified splits.

Signaling primarily occurs between the path computation system and each of junction nodes 10 of MPTED 15. Auxiliary signaling may occur between a junction node 10 and its phops.

The path computation system may signal the corresponding junction data directly to each of the junction nodes 10 of MPTED 15, and each of the junction nodes 10 may generate and store forwarding information based on its corresponding junction data. In some cases, the forwarding information is generated by the path computation system or a signaling system and provided to a junction node to implement the shares represented in the corresponding junction data for the node.

As shown in FIG. 1 and for example, ingress node 10A sends junction data 18 to node 10B, where junction data 18 indicates the respective shares of the incoming bandwidth of the traffic trunk (transported using MPTED 15) that node 10B is to send on its outgoing links of MPTED 15. For node 10B, these are links {10B, 10E} and {10B, 10D}. As an example, junction data 18 may indicate that node 10B is to load balance the traffic trunk among these outgoing links at a ratio of 60%/40% or 3/2. Node 10B generates and stores forwarding data based on junction data 18 to implement the indicated shares and forwards packets of the traffic trunk accordingly. The load balancing shares (or "splits") for the outgoing links may be specified in junction data and in forwarding data using an absolute amount, a share, a ratio, or other indication. Node 10B receives all incoming bandwidth of the traffic trunk on link {10A, 10B}, but other junction nodes, such as node 10E, may have multiple incoming links.

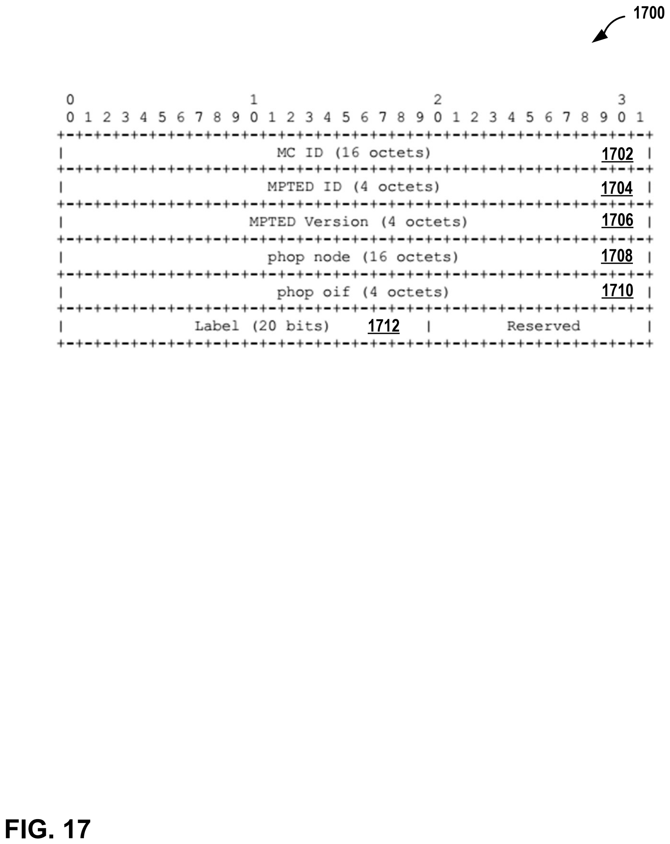

The path computation system may send junction data 18 in a message to node 10B. Example messages and protocols for sending messages are described in more detail below. For example, the message to node 10B may be a JUNCTION message. Where path computation system is node 10A, node 10A does not need to send itself the junction data that it computes for node 10A. In some examples, the path computation system may thus signal the creation or update of MPTED 15 by sending, to each of junction nodes 10, a JUNCTION message the junction node specification (bandwidth, phops, nhops and splits) and may also include an identifier for MPTED 15, a tunnel type, and one or more flags. After a junction node parses the specification, for tunnel types other than SigLab, it installs forwarding information base (FIB) state for the junction to implement the load balancing according to the splits. For tunnel type SigLab, a junction node v allocates an incoming MPLS label L_u for each phop u, and sends a LABEL message to u that includes the MPTED identifier, the phop (u's loopback address + u's oif for the link), and the allocated label L_u. The junction node u records label L_u as part of its own junction state. When v receives a LABEL message from all its nhops, it installs swap state in its label forwarding information base (LFIB). An example message for providing a label is shown and described with respect to FIG. 17.

In some examples, the path computation system may compute the DAG using a quantity of slack, which may be expressed as a percentage over the minimum path length, value over the minimum path length, or other relation with respect to the minimum path length (i.e., shortest path). Thus, rather than requiring that the DAG be made up of strictly shortest paths, the path computation algorithm used by the path computation system may permit paths within some quantity of slack of the shortest path, resulting in a non-equal-cost multipath (nECMP) for the DAG. This technique may increase the number of acceptable paths and thus the amount of bandwidth for a traffic trunk that can be transported using MPTED 15. As shown in FIG. 1, MPTED 15 includes path {10A, 10B, 10E, 10D} even though the cost of the path is 210 versus a cost of 200 for other end-to-end paths of MPTED 15.

In some examples, the operator may specify multiple egress nodes 10 for MPTED 15, and the path computation system may compute the DAG from the one or more ingress nodes to the multiple egress nodes 10. This technique may increase the amount of bandwidth that can be transported for a traffic trunk using MPTED 15 and output from the network and may also allow for reduced control and data plane state due to state sharing.

Each of junction nodes 10 of MPTED 15 receives network traffic of a traffic trunk sourced by source network 12 and destined for destination network 14. Each of junction nodes 10 forwards, according to the appropriate shares for load balancing specified in junction data, the network traffic of the traffic trunk on its outgoing links 7.

Ingress node 10A maps the traffic trunk that is to be transported using paths of MPTED 15 to MPTED 15. In FIG. 1, the network traffic for the traffic trunk is received from source network 12. This may include ingress node 10A mapping the traffic trunk to an MPTE tunnel provisioned in network 6 to implement MPTED 15. Ingress node 10A identifies packets belonging to the traffic trunk using properties, such as packet header information or labels, and assigns the traffic to an MPTE tunnel for MPTED 15. Upon receiving packets belonging to the traffic trunk, the ingress node 10A and subsequent junction nodes 10B, 10C, and 10E use stored forwarding state to load balance the traffic across multiple outgoing links based on the shares for each node's corresponding outgoing interfaces, as determined for MPTED 15 and the maxflow algorithm as described above. Nodes 10 identify the associated MPTE tunnel through tunnel information, such as MPLS labels, included in the packets and forward the packets toward the egress node 10D according to the determined shares for each next hop (outgoing interface). This collaborative forwarding ensures that the traffic is steered through the constrained set of paths of MPTED 15 while improving resource usage across the multipath topology versus conventional multipath and traffic engineering techniques.

In some examples, the path computation system may receive an indication that a node or link has a down status, has failed, or is otherwise unable to forward or transport packets for the MPTED. In such cases, rather than recomputing the MPTED with the updated topology, the path computation system may leave the failed node/link in the MPTED but set the share of outgoing bandwidth to be sent via the node or link to 0. The path computation system may update the node having the failed outgoing link with updated junction data to redistribute shares of the MPTE traffic to one or more other outgoing links. If the node itself has failed, or all outgoing links of a node are down/failed, then the path computation system may update nodes upstream of that node with updated junction data to redistribute the MPTE traffic around that node. In some examples, the path computation system may update the available bandwidth for a down/failed link to 0 or update the available bandwidth for all available outgoing links of a down/failed node to 0, recompute shares and the junction data per node based on the updated available bandwidths, and update nodes of the MPTED with updated junction data as needed. As a result, the MPTED tunnel does not need to be re-signaled but can instead operate in a degraded mode. If the node or link at issue recovers, the original junction data may be re-signaled to restore the full forwarding capability of the MPTED tunnel.

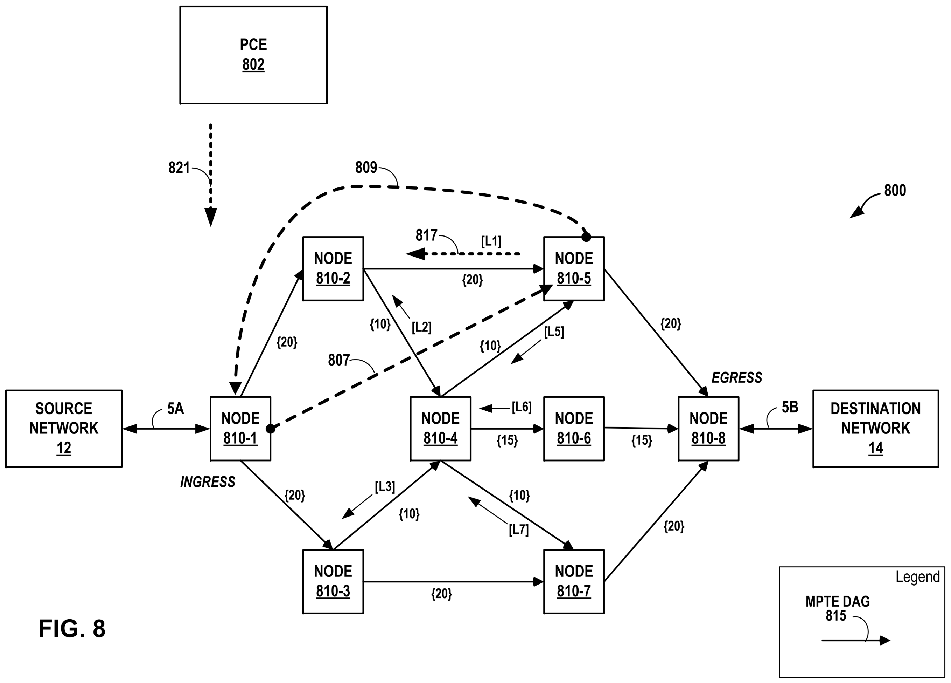

In the above description, the path computation system performs both path computation and MPTE signaling of the junction data to nodes 10. However, path computation and MPTE signaling may be performed by different systems: the MPTED computer and the signaling source. This is described in further detail below with respect to FIG. 8 and elsewhere. Thus, functionalities ascribed to the path computation system in FIG. 1 should be understood as optionally being performed by a MPTED computer or a signaling source, as appropriate.

A path computation system and nodes 10 may use an MPTE protocol (MPTEP) to create an MPTED. MPTEP may run over TCP. To implement an MPTED, TCP sessions may therefore be set up between any ingress junction node 10 operating as an MC and all other potential junction nodes 10, between a PCE and all potential junction nodes 10, and/or if tunnel type SigLab is used, between each junction node 10 and its immediate neighboring junction nodes 10.

FIG. 2A is a block diagram illustrating nodes 10 of network 6 of FIG. 1 and MPTED 15, in accordance with one or more aspects of this disclosure. Each of the communication links 7 included in MPTED 15 is shown with a value denoting an available bandwidth on the link. For example, link {10A, 10B} has an available bandwidth of 10 Gbps and link {10E, 10D} has an available bandwidth of 8 Gbps.

The path computation system applies a max flow algorithm, in this case Ford-Fulkerson, to MPTED 15 with the available bandwidths to compute result data that includes the flow value on each link. The flow values may correspond to the respective bandwidths to be used the links, which may for each link be the bandwidth on that link needed to achieve maximum flow for MPTED 15. The flow value may be the flow value computed by the max flow algorithm needed to achieve maximum flow for MPTED 15.

The result of the max flow algorithm is shown in FIG. 2B. The maximum flow or aggregate bandwidth for MPTED 15 is 27 Gbps. Each link has a corresponding {flow value / available bandwidth} as shown. For example, link {10A, 10B} has a flow value of 7 Gbps out of its available 10 Gbps {7/10} and link {10E, 10D} has an available bandwidth of 8 Gbps out its available 8 Gbps {8/8}. In some examples, if the aggregate bandwidth exceeds a required bandwidth for an MPTED, the path computation system may scale down the flow values on each link needed by a scaling factor based a relationship between the aggregate bandwidth and the required bandwidth.

Path computation system determines, for each of junction nodes 10 in MPTED 15, respective shares of the incoming bandwidth for MPTED 15 to the node that the node is to send on the one or more outgoing links of the node. Mathematically, the share for an outgoing interface i for node S may be defined by the following ratio: ${S}_{i} = \frac{{Flow}_{i}}{{\sum }_{j = 1}^{Q} {Flow}_{j}}$

In this formula, *Flowᵢ* represents the flow value computed by the max flow algorithm for the *i^{th}* outgoing link, and the denominator represents the sum of flow values for all Q nhop outgoing interfaces of the junction node for the MPTED. The resulting share may be expressed as an absolute bandwidth amount, a ratio, or a percentage.

For instance, in the example of FIG. 2B, node 10A for instance has outgoing links to {10B, 10D, 10C} with flow values {7, 14, 6}, respectively. 7/14/6 is the ratio indicating shares of the incoming bandwidth for MPTED 15 to node 10A that node 10A is to send on those outgoing links {10B, 10D, 10C}. In other words, 7/27 share on the outgoing link to node 10B, 14/27 share on the outgoing link to node 10B, and 6/27 share on the outgoing link to node 10E.

Node 10E, for instance, has just one outgoing link (to node 10D). Thus, the entire share of incoming bandwidth for MPTED 15 to node 10E is forwarded on that one outgoing link. Node 10E has two incoming links, from Node 10C and from Node 10B. As can be seen, the aggregate incoming bandwidth (8 Gbps) from these links is equal to the outgoing bandwidth (8 Gbps) on the outgoing link to node 10D.

For each junction node of junction nodes 10, path computation system generates junction data that indicates the outgoing links (next hops or 'nhops') of the junction node for MPTED 15 and indicates the corresponding share of incoming bandwidth for MPTED 15 that the junction node is to forward on each of the outgoing links of the junction node for MPTED 15. Path computation system sends generated, corresponding junction data to each of junction nodes 10, which generate and install forwarding state as described with respect to FIG 1, and forward network traffic of the traffic trunk accordingly to implement MPTED 15.

The junction data for MPTED 15 and forwarding data generated from the junction data may have one or more technical improvements over forwarding data for multiple TE paths that would otherwise need to be signaled to implement the various end-to-end paths of MPTED 15. For example, two TE paths would need to traverse node 10E to implement similar end-to-end paths as is provided by MPTED 15. Creating and implementing these two TE paths requires a separate signaling processes for each of the TE paths and also requires separate forwarding state in the data plane for each of the TE paths, e.g., separate label pairs for each of the TE paths. By contrast, incoming bandwidth for MPTED 15 is aggregated at node 10E and may be identified using a single label or other identifying information for packets of the traffic trunk for MPTED 15. Once identified, node 10E forwards the packets of the traffic trunk MPTED 15 on the outgoing link to node 10D according to the share indicated in the junction data for node 10E (here, 100% because there is a single outgoing link). Thus, the junction data can be sent by the path computation system to node 10E in one signaling process and stored as less forwarding data (requiring less memory of node 10E) versus the forwarding data needed to implement multiple TE paths. The signaling process for MPTED 15, in contrast to conventional RSVP-TE, may also avoid use of an Explicit Route Object (ERO) and Record Route Object (RRO) and the complex signaling involved with RESV/PATH messages between pairs of nodes of each of the TE paths. However, the use of RSVP-TE makes it easier to gradually insert MPTE capabilities to a network. Where an MPTE DAG traverses nodes that are not MPTE-capable, a "classical" RSVP-TE ERO can be used to traverse those nodes until another MPTE-capable node is reached.

Junction data for a junction node may also indicate a Junction bandwidth, which is the bandwidth incoming to the junction node. This value may be used to reserve an appropriate amount of bandwidth for an outgoing link based on the relationship between the share for that outgoing link and the Junction bandwidth. For example, if the Junction bandwidth is 100 Mbps and the share for an outgoing link is 40%, then the node may reserve (100 Mbps * 40%) or 40 Mbps on that outgoing link for MPTED 15.

Junction data may include information for establishing tunnels with which to identify the MPTED 15 and associated outgoing next hops for outgoing links. For example, node 10E may, based on junction data, send tunnel information in the form of a first label to node 10B and a second label to node 10C, the first label and the second label identifying to node 10E the MPTED 15. On receiving traffic with the first label from node 10B or with the second label from node 10C, node 10E uses the first/second labels to determine the traffic is associated with MPTED 15 and therefore forwards any such traffic using the outgoing next hop for the outgoing link to node 10D. This effectively aggregates traffic from multiple incoming links onto the outgoing links of node 10B. Node 10B may itself add a label to such outgoing traffic that node 10B received from node 10D to identify traffic associated with MPTED 15.

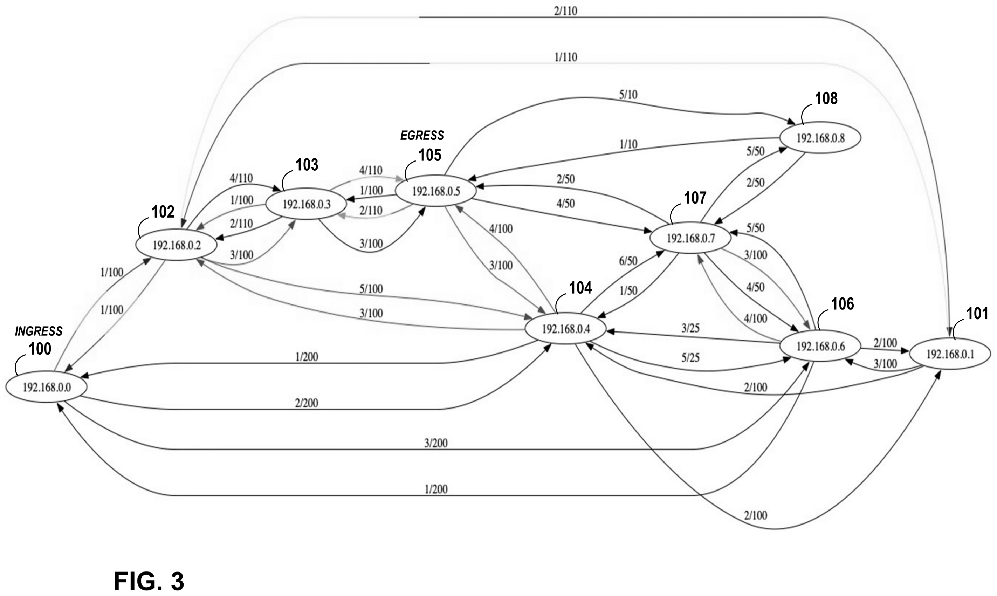

FIG. 3 is a diagram illustrating a more complicated network with nodes 100 through 108, in which example MPTE techniques are implemented in accordance with one or more aspects of this disclosure. Node 100 is an ingress node, and node 105 is an egress node.

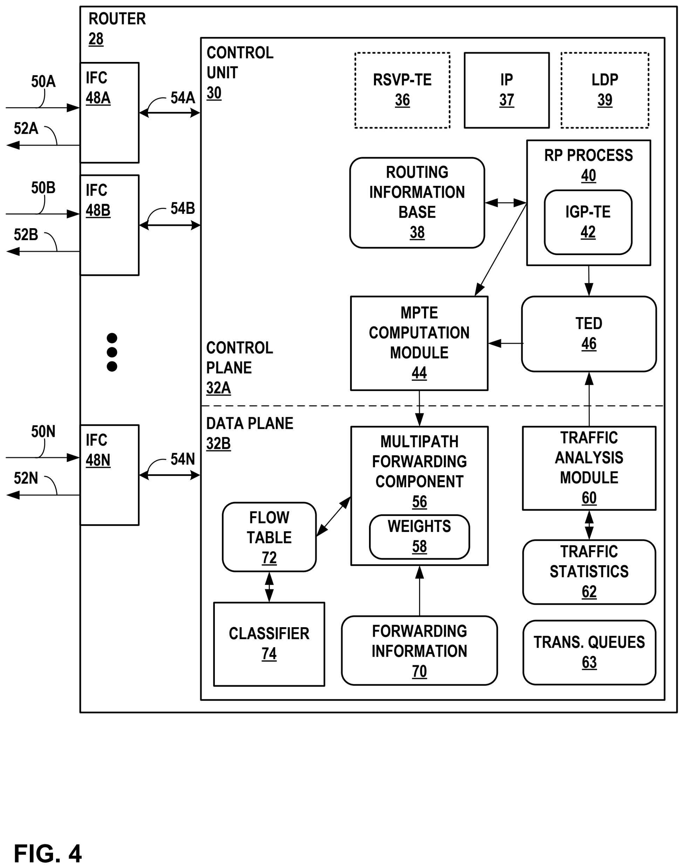

FIG. 4 is a block diagram illustrating an example router 28 that implements MPTE techniques in accordance with one or more aspects of this disclosure. Router 28 may represent an example embodiment of any of nodes 10 of FIG. 1. In other examples of the described techniques, MPTE computation is performed by a separate computing system rather than in a router, as described above with respect to FIG. 1. In such examples, the separate computing system has one or more processors that execute instructions to implement functionality attributed below to MPTE computation module 44, and to send respective junction data to junction nodes as described elsewhere herein.

Router 28 includes a control unit 30 and interface cards 48A-48N ("IFCs 48") coupled to control unit 30 via internal links 54A-54N. Control unit 30 may include one or more processors (not shown in FIG. 4) that execute software instructions, such as those used to define a software or computer program, stored to a computer-readable storage medium (again, not shown in FIG. 4), such as non-transitory computer-readable mediums including a storage device (e.g., a disk drive, or an optical drive) or a memory (such as Flash memory, random access memory or RAM) or any other type of volatile or non-volatile memory, that stores instructions to cause the one or more processors to perform the techniques described herein. Alternatively or additionally, control unit 30 may comprise dedicated hardware, such as one or more integrated circuits, one or more Application Specific Integrated Circuits (ASICs), one or more Application Specific Special Processors (ASSPs), one or more Field Programmable Gate Arrays (FPGAs), or any combination of one or more of the foregoing examples of dedicated hardware, for performing the techniques described herein. Further, while described with respect to a particular network device, e.g., a router, the techniques of this disclosure are applicable to other types of network devices such as switches, content servers, bridges, multi-chassis routers, or other device capable of performing the described techniques.

In this example, control unit 30 is divided into two logical and/or physical "planes" to include a first control (or "routing") plane 32A and a second data or forwarding plane 32B. That is, control unit 30 implements two separate functionalities, e.g., the routing and forwarding functionalities, either logically, e.g., as separate software instances executing on the same set of hardware components, or physically, e.g., as separate physical dedicated hardware components that either implement the functionality in hardware or execute a computer program or other software to implement the functionality. Data plane 32B may include a line card with specialized forwarding hardware. In some examples, data plane 32B may implement a virtual router or virtual switch. In some examples, data plane 32B may be implemented by a compute node/server, virtual machine, or Smart NIC.

Control plane 32A of control unit 30 executes the routing functionality of router 28. In this respect, control plane 32A represents hardware or a combination of hardware and software of control unit 30 that implements routing protocols (not shown in FIG. 4) by which routing information stored in routing information base 38 ("RIB 38") may be determined. RIB 38 may include information defining a topology of a network, such as network 6 of FIG. 1, learned by execution by routing protocol process 40 ("illustrated as RP process 40") of Interior Gateway Protocol with Traffic Engineering extensions 42 ("IGP-TE 42"). For example, RIB 38 may include a link-state database of physical and logical links (e.g., LSPs advertised as forwarding adjacencies). RIB 38 also includes a forwarding database that stores routes calculated by RP process 40 for various destinations. IGP-TE 42 may represent an embodiment of any interior routing protocol that announces and receives link attributes for links of the network. For example, IGP-TE 42 may represent OSPF-TE or IS-IS-TE. RIB 38 may also include an MPLS routing table that stores MPLS path and label information for LSPs through the network. In such instances, IGP-TE 42 advertises TE paths/LSPs and associated metrics as forwarding adjacencies to other instances of IGP-TE executing on additional routers of the network.

RP process 40 (e.g., routing protocol software executing on control unit 30 of router 28) may resolve the topology defined by routing information in RIB 38 to select or determine one or more active routes through the network to various destinations. Control plane 32A may then update data plane 32B with these routes, where data plane 32B maintains these routes as forwarding information 70 that maps network destinations to one or more outgoing interfaces 52 for outgoing links. Forwarding or data plane 32B represents hardware or a combination of hardware and software of control unit 30 that forwards network traffic received by interface cards 48 via incoming links 50A-50N on outgoing links 52A-52N of interface cards 48 in accordance with forwarding information 70 and/or flow table 72. For example, aspects of data plane 32B may be implemented within router 28 as one or more packet forwarding engines ("PFEs") each associated with a different one of IFCs 48 and interconnected to one another via a switch fabric.

Control plane 32A also includes RSVP-TE 36, IP 37, and LDP 39. IP 37 is used by router 28 to support IP-based forwarding. LDP 39 is a signaling protocol that is used for distributing labels associated with LSPs in a network. RSVP-TE 36 of control plane 32A is a signaling protocol that can be used to establish explicitly routed LSPs over a network using an Explicit Route Object (ERO). RSVP-TE 36 may receive an explicit routing path from an administrator, for example, for a new LSP tunnel as well as a configured metric for the LSP tunnel. RSVP-TE 36 requests downstream routers to bind labels to a specified LSP tunnel set up by router 28 and may direct downstream routers of the LSP tunnel to reserve bandwidth for the operation of the LSP tunnel. In addition, RSVP-TE 36 installs MPLS forwarding state to forwarding information 70 to reserve bandwidth for one of outgoing links 52 of IFCs 48 for the LSP tunnels and, once the LSP is established, to map a label for the LSP to network traffic, which is then forwarded by data plane 32B in accordance with the MPLS forwarding state for the LSP. The set of packets assigned by router 28 to the same label value for an LSP tunnel belong to a particular forwarding equivalence class (FEC) and define an RSVP flow. RSVP-TE 36 and LDP 39 are optional for and may not be implemented in all example instances of router 28.

The use of MPTE requires more sophisticated Operations, Administration and Management (OAM) techniques to understand when the MPTE tunnel is fully functional. Furthermore, MPTE requires more sophisticated statistics collection to analyze bandwidth usage and load balancing effectiveness. Traffic analysis module 60 of data plane 32B can monitor traffic through data plane 32B (e.g., LDP or IP traffic) that is not associated with reserved bandwidth, and generate traffic statistics 62. Traffic analysis module 60 may, for example, monitor the amount of LDP traffic being forwarded on each of outgoing links 52. In some embodiments, traffic analysis module 60 may control the granularity of traffic statistics 36. For example, in one embodiment, traffic analysis module 60 may only monitor and generate statistics for a total amount of LDP traffic being forwarded from router 28 on each one of outgoing links 52. In other embodiments, traffic analysis module 60 may, however, generate more granular traffic statistics by monitoring the different types of traffic. For example, traffic analysis module 60 may track the amount of LDP traffic forwarded on each of outgoing links 52 as well as the amount of IP traffic forwarded on each of outgoing links 52. Aspects of traffic analysis module 60 may be distributed to control plane 32A in various instances of router 28.

Traffic analysis module 60 may calculate the amount of bandwidth available on one or more outgoing links 52 associated with router 28. Traffic analysis module 60 calculates the available bandwidth using the statistics stored in traffic statistics 36, i.e., statistics for current consumption of non-reserved bandwidth, as well as the reservation requests stored in forwarding information 70. In this manner, traffic analysis module 60 accounts for both the amount of bandwidth reserved for MPTE traffic, RSVP-TE traffic and the amount of LDP or other traffic currently using bandwidth of outgoing links 52. As a result, traffic analysis module 60 may generate bandwidth availability information for each of outgoing links 52. For each of outgoing links 52, traffic analysis module 60 may, for example, calculate the available bandwidth information by averaging the amount of LDP traffic over time, and subtracting the average LDP traffic and the amount of reserved bandwidth from a total capacity associated with each of the links. Alternatively, or in addition, the techniques may be used to account for IP traffic or other traffic forwarded on outgoing links 52 that is not associated with reserved resources. For example, for each of outgoing links 52, traffic analysis module 60 may monitor the IP traffic, and traffic analysis module 60 calculates an average amount of IP traffic over a configurable period. Traffic analysis module 60 calculates the available bandwidth by taking the capacity of the link minus the monitored traffic statistics minus the RSVP reservations. Traffic analysis module 60 stores the calculated bandwidth availability information to traffic engineering database ("TED 46").

Traffic analysis module 60 may monitor traffic by monitoring transmission queues 63 (illustrated as "trans. queues 63") for outgoing interfaces to outgoing links 52. After data plane 32B sends a packet to an outgoing interface, the one of interface cards 48 that includes the outgoing link 52 associated with the outgoing interface queues the packet for transmission on one of transmission queues 63. Many different transmission queues 63 representing different classes of service may be mapped to each of outgoing links 52, and the amount of time that a packet remains in a queue strongly correlates to the amount of available bandwidth of the corresponding link. Each physical or logical link (e.g., an LSP) is associated within forwarding information 70 with one of the transmission queues 63 for the outgoing interface for the link. RSVP-TE 28 reserves for a reservation-oriented forwarding class some proportion of the bandwidth for the outgoing link by installing reservation state in forwarding information 70. In effect, this associates RSVP LSPs with one of transmission queue 63 that has assured (i.e., reserved) bandwidth. Similarly, RP process 60 implementing MPTE may reserve for its reservation-oriented forwarding class some proportion of the bandwidth of the outgoing link by installing reservation state in forwarding information 70.

Traffic analysis module 60 may periodically monitor available bandwidth for outgoing links by monitoring the transmission queues 63 for classes of service that have no assured bandwidth. Traffic analysis module 60 may, for instance, periodically determine the queue sizes for non-bandwidth-assured ones of transmission queues 63 and apply a function to the queue sizes that returns an amount of available bandwidth for the link based on the queue sizes. As another example, traffic analysis module 60 may periodically set a timer to first measure the length of time between enqueuing and dequeuing a particular packet for transmission and then apply a function to that returns an amount of available bandwidth for the link based on the measured length. The function may include link capacity and reserved bandwidth parameters to compute available bandwidth as a difference between link capacity and a sum of reserved bandwidth and IP/LDP bandwidth presently in use.

In some examples, traffic analysis module 60 stores the determined available bandwidth to TED 46. In some instances, traffic analysis module 60 stores a time-series of periodically determined available bandwidths for each of outgoing links 52 to traffic statistics 62 and applies a smoothing function, such as a moving average filter, weighted moving average filter, or exponentially weighted moving average filter, to the set of time-series to attenuate traffic bursts over the outgoing links. When traffic analysis module 60, for any one of outgoing interfaces 52, determines the moving average exceeds a threshold increase or threshold decrease from an available bandwidth value previously copied to TED 46, traffic analysis module 60 stores the moving average as the new available bandwidth value for the corresponding link to TED 46. Storing of the new available bandwidth value, by traffic analysis module 60 to TED 46, may trigger an IGP advertisement by IGP-TE 42 of available bandwidth for the link. In some instances, IGP-TE 42 reads traffic statistics 62 to determine available bandwidth for a link.

In some examples, router 28 may employ equal-cost multipath (ECMP) routing techniques to distribute network traffic load over multiple equal-cost paths through the network. RP process 40 executes an SPF algorithm over a link-state database of RIB 38 (or a CSPF algorithm over TED 46 in addition to the link-state database of RIB 38) to identify multiple equal-cost paths to the same destination. RP process 40 forms an ECMP set composed of the equal-cost paths and derives one or more forwarding structures from the calculated paths to maintain the equal-cost paths in the form of multiple possible next hops to the same destination. RP 40 process then installs these forwarding structures to forwarding information 70, and data plane 32B may use any available forwarding structures derived from the ECMP set in forwarding network traffic flows toward the destination.

MPTE computation module 44 implements functionality attributed elsewhere in this disclosure to a path computation system. That is, MPTE computation module 44 performs multipath traffic engineering (MPTE) to compute and provision an MPTED in network 6 for a traffic trunk. MPTE computation module 44 may compute a DAG using topology data stored in TED 46. MPTE computation module 44 may compute max flow for the DAG using available bandwidth for the links of the DAG stored in TED 46. A network may have multiple MPTEDs. MPTE computation module 44 may also update MPTE reservation state as needed in TED 46, which RP process 60 can then advertised to other nodes 10.

An operator may specify characteristics of the MPTED via a user interface of router 28 (not shown in FIG. 4). Characteristics of the MPTED may include one or more of constraints, one or more ingress nodes, one or more egress nodes, or a required bandwidth. Data defining an MPTED, including data indicating the characteristics, may be stored in configuration data of router 28 (not shown).

The following description is one example description for implementing load balancing at a junction node for an MPTED 15. In this example, based on junction data for MPTED 15 for router 28, MPTE computation module 44 may compute a weight for each of the indicated outgoing links as needed to implement the respective shares indicated in the junction data and, in some cases, based on the Junction bandwidth. MPTE computation module 44 may install computed weights for junction data for MPTED 15 to weights 58 of multipath forwarding component 56 to cause multipath forwarding component 56 to load balance incoming bandwidth for MPTED 15 according to weights 58 to implement the indicated shares. In some examples, the multipath forwarding component 56 load balances on a "per-packet" basis, with packets being sent to the various next hops in the ratio of weights 58. In some examples, multipath forwarding component 56 load balances on a "per-flow", "per-session", "per-application", or other basis, with these being sent to the various next hops in the ratio of weights 58.

In some examples, classifier 74 identifies new packet flows and classifies incoming packets received on incoming links 50 to packet flows referenced by flow table 72. A "packet flow," as used herein, refers a set of packet header field values and/or packet data that cause any packet containing such values to be assigned to a particular path in an ECMP set toward that packet's destination. In addition, a packet flow is the minimum granularity at which router 28 maintains state in flow table 72 for forwarding network packets that are classified to a packet flow referenced in flow table 72. Classifier 74 may classify packets to a packet flow referenced in flow table 72 by, for example, their respective <source IP address, destination IP address, protocol identifier> 3-tuple value or by their respective <source IP address, destination IP address, source port, destination port, protocol identifier> 5-tuple value, or by labels, including "entropy labels".

Flow table 72 comprises a data structure, e.g., a table, for storing information or data in packet flow entries each pertaining to a different packet flow traversing router 28. Such data includes in some instances a reference to a next hop structure in forwarding information 70 for implementing junction data. Although illustrated and described as a table, the data in flow table 72 may be stored to any other data structure, such as a graph, a linked-list, etc. Flow table 72 stores data describing each flow previously identified by classifier 74, e.g., the five-tuple and other information pertinent to each flow. That is, flow table 72 may specify network elements associated with each active packet flow, e.g., source and destination devices and ports associated with the packet flow. Flow table 72 may also include a unique application identifier (ID) for each flow that uniquely identifies the application to which each flow corresponds.

When classifier 74 identifies a new flow in the traffic trunk for MPTED 15, multipath forwarding component 56 may determine that forwarding information 70 includes forwarding data for MPTED 15 for the flow. In other words, multipath forwarding component 56 determines there is an available set of next hops for the flow. Multipath forwarding component 56 therefore applies respective weights 58 for the next hops of the and assigns the new flow to one of the next hops according to weights 58. Multipath forwarding component 56 may apply an algorithm that is parameterized according to the weights 58 of the ECMP set for the new flow destination and use the result of the function to select one of the possible next hops for flow assignation. For example, in some instances, multipath forwarding component 56 applies a weighted round-robin algorithm that is weighted according to the weights 58 of the set to select one of the possible next hops for new packet flows in the traffic trunk. As another example, in some instances, multipath forwarding component 56 applies weighted hashed mode techniques according to weights 58 for the next hops and then hashes, e.g., the source/destination addresses of the new flow to select a hash bucket and an associated next hop. (The next hops are for outgoing links indicated in junction data for MPTED 15.)

To associate the new flow with the selected next hop, multipath forwarding component 56 may add a reference (e.g., a pointer that resolves to a next hop or an index) to the selected next hop in the forwarding information 70 in the flow table 72 entry generated by classifier 74 for the new flow. The reference to the selected next hop in the flow table 72 entry for the new flow causes multipath forwarding component of data plane 32B to forward packets of the new flow to the selected next hop. As a result, router 28 assigns packet flows and balances network traffic loads to implement a junction node and a portion of MPTED 15.

The detailed description of MPTE-related computation, signaling, and forwarding techniques performed by router 28 is merely one example implementation for such techniques. In some examples, router 28 may instead be a layer 3 switch, virtual router, Software Defined Wide Area Network (SD-WAN) device, firewall device, gateway, wireless controller with layer 3 routing capabilities, or other device that forwards packets using layer 3 forwarding.

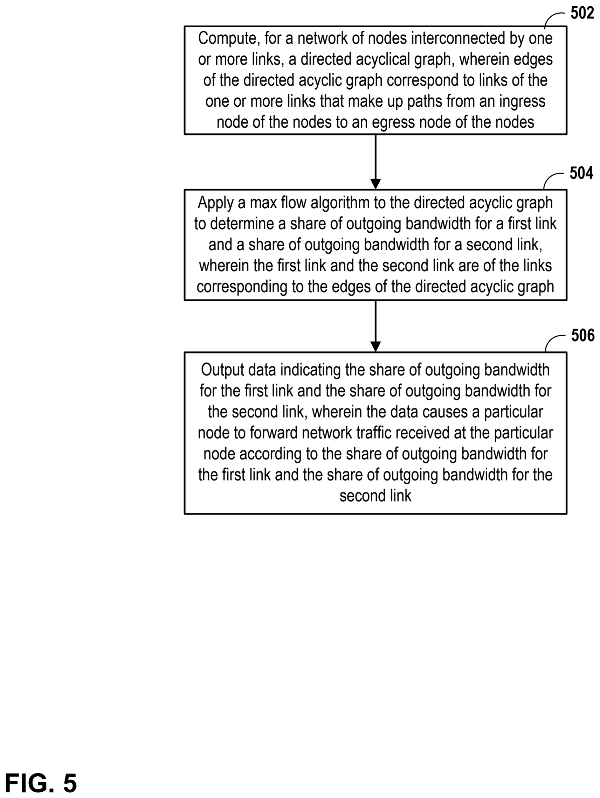

FIG. 5 is a flowchart illustrating an example operation of a system, in accordance with one or more aspects of this disclosure. The system may be any of the path computation systems described herein. The particular node 10B is selected for example purposes only.

The system is configured to compute, for a network 6 of nodes 10 interconnected by one or more links 7, a directed acyclic graph, wherein edges of the directed acyclic graph correspond to links of the one or more links that make up paths from an ingress node 10A of the nodes 10 to an egress node 10D of the nodes 10 (502). The system is configured to apply a max flow algorithm to the directed acyclic graph to determine a share of outgoing bandwidth for a first link and a share of outgoing bandwidth for a second link, wherein the first link and the second link are of the links corresponding to the edges of the directed acyclic graph (504). As an example, the system may be configured to apply, based on respective available bandwidths of a first link {10B, 10D} (5) and a second link {10B, 10E} (10) of the links corresponding to the edges of the directed acyclic graph, the max flow algorithm to the directed acyclic graph to determine the respective bandwidths for the first link and the second link. (The maxflow algorithm may be based on additional available bandwidths for other links corresponding to edges in MPTED 15.) The system is configured to output, to a particular node 10B of the nodes 10, data indicating the share of outgoing bandwidth for the first link and the share of outgoing bandwidth for the second link to cause the particular node 10B to forward incoming bandwidth to node 10D according to share of outgoing bandwidth for the first link and to node 10E according to the share of outgoing bandwidth for the second link (506). The first link and the second link may be coupled to the particular node. The particular node 10B may forward, using the first link, incoming bandwidth to node 10D according to share of outgoing bandwidth for the first link. The particular node 10B may forward, using the second link, incoming bandwidth to node 10E according to the share of outgoing bandwidth for the second link. Network traffic is not shown in FIG. 1 but may be for a traffic trunk made up of packet flows from source network 12 to destination network 14.

In some examples, the directed acyclic graph is already computed or is otherwise an optional step. In such examples, the system may obtain data associating a first incoming link, a second incoming link, a share of outgoing bandwidth for a first outgoing link, and a share of outgoing bandwidth for a second outgoing link ; and forward, based on the data, incoming network traffic received on the first incoming link and incoming network traffic received on the second incoming link via the first outgoing link according to the share of outgoing bandwidth for the first outgoing link and via the second outgoing link according to the share of outgoing bandwidth for the second outgoing link.

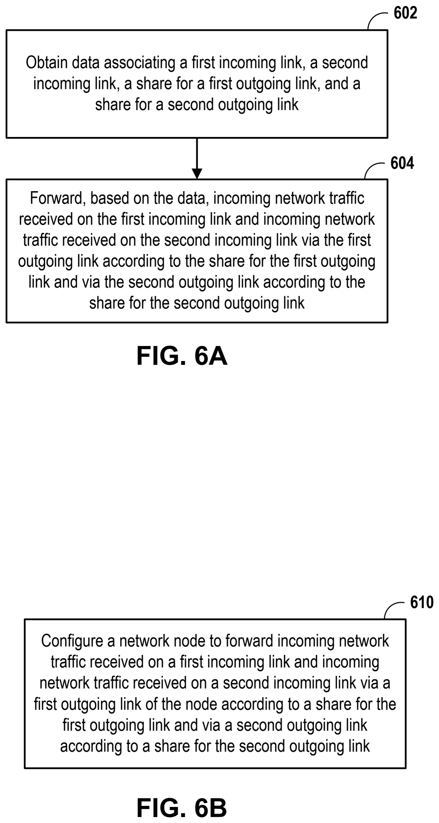

FIG. 6A is flowchart illustrating an example operation of a node, in accordance with one or more aspects of this disclosure. The node 10E is selected for example purposes only. Node 10E is configured to obtain data associating a first incoming link {10B, 10E}, and a second incoming link {10C, 10E}, a share for a first outgoing link {10E, 10D}, and a share for a second outgoing link (not shown in FIG. 1) (602). Node 10E is configured to forward, based on the data, incoming network traffic received on the first incoming link and incoming network traffic received on the second incoming link via the first outgoing link according to the share for the first outgoing link and via the second outgoing link according to the share for the second outgoing link (604).

FIG. 6B is flowchart illustrating an example operation of a system, in accordance with one or more aspects of this disclosure.

The node 10E of FIG. 2B is selected for purposes of a first example. In some aspects, a system can output junction data to a node without itself having performed the DAG and max flow computations. In such aspects, a system is configured to configure, with data, node 10E to forward incoming network traffic received on a first incoming link {10B, 10E} and incoming network traffic received on a second incoming link {10C, 10E} via a first outgoing link of node 10E according to a share for the first outgoing link and via a second outgoing link according to a share for the second outgoing link (610). Different packets of the incoming bandwidth are received on the first incoming link and on the second incoming link. Incoming bandwidth may be forwarded on outgoing links, according to respective shares for the outgoing links, on a "per-packet", "per-flow", "per-session", "per-application", or other basis.

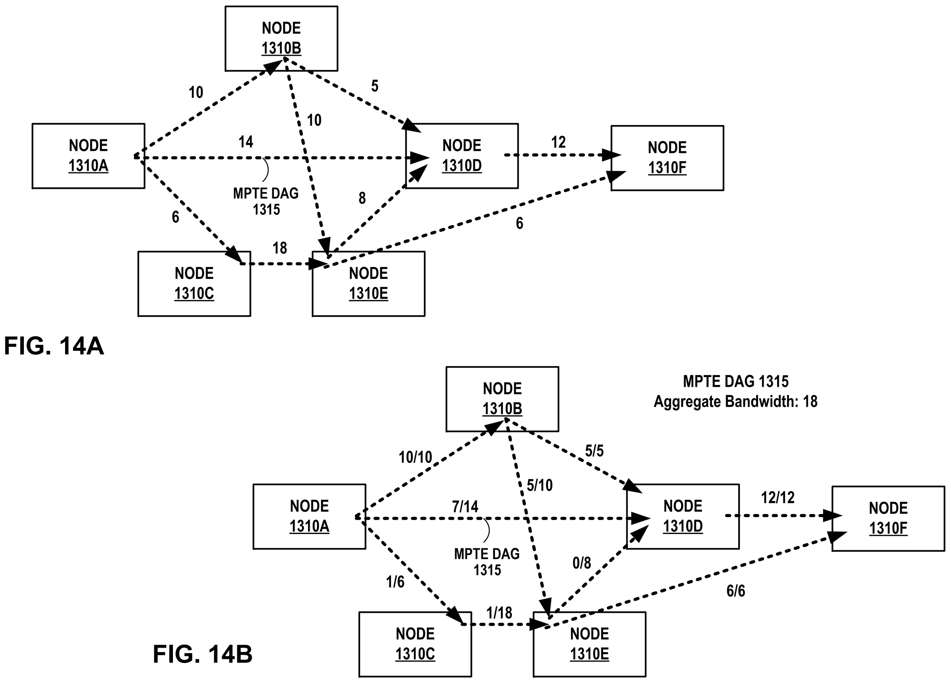

The node 1310E of FIG. 14B is selected for purposes of a second example. In some aspects, a system can output junction data to a node without itself having performed the DAG and max flow computations. In such aspects, a system is configured to configure, with data, node 1310E to forward incoming bandwidth received on a first incoming link {1310B, 1310E} or a second incoming link {1310C, 1310E} via a first outgoing link {1310E, 1310D} of node 1310E according to a share (0) for the first outgoing link and via a second outgoing link {1310E, 1310F} of node 1310E according to a share (8) for the second outgoing link (610).

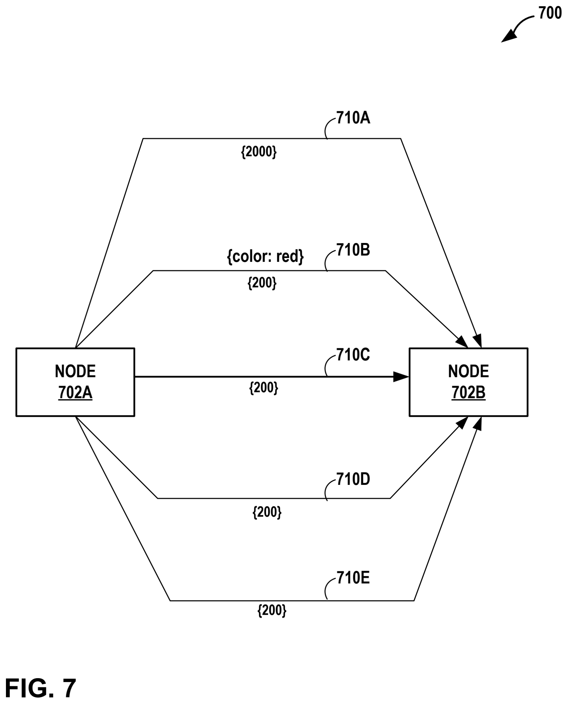

FIG. 7 is a block diagram illustrating an example network system 700 that implements example multipath traffic engineering (MPTE) techniques in accordance with one or more aspects of this disclosure. Network system 700 includes nodes 702A-702B, which may be similar to nodes 10 of FIG. 1, and paths 710A-710E made up of links and (in most cases) intermediate nodes (not shown).

Path 710A has a total metric of 2000 and all other paths 710B-710E have a total metric of 200. Path 710B includes a link with color red. All paths have an available bandwidth of 10 Gbps.

Suppose the TE constraints specify: find paths from node 702A to 702B; avoid links with color red; and the required aggregate bandwidth is 25 Gbps. Path 710B is excluded because of the red link. There are thus 3 shortest paths and 4 total acceptable paths from 702A to 702B. Any of the acceptable paths can accommodate the required bandwidth.

There is a benefit in computing and signaling the "all paths" DAG (i.e., give the Junction at node 702A 4 next hops rather than 3 for the "all shortest paths" DAG). If the bandwidth rises from 25 to 40 Gbps, there is enough capacity in the "all paths" DAG. If the bandwidth goes beyond that, the constraints cannot be met. The benefit is that the "shape" of the DAG does not change even as the bandwidth rises (to the point of feasibility). This reduces signaling churn. (The load splitting at each junction node may change, but the Junctions nodes themselves will not.)

An operator may decide that a metric of 2000 is "too much" and cause the system to "ignore" the path 710A by setting its share of the bandwidth (or load splitting) to 0 (provided the remaining paths can accommodate the required bandwidth). Once the bandwidth goes beyond 30 Gbps, the share can be changed to a non-zero value. That way, the network can benefit from the lower churn but only use the longer path if forced to by the bandwidth constraint. Lower churn may allow an operator to avoid setting the auto-bandwidth timers longer than the operator would prefer to reduce the churn, thus making the network more responsive to bandwidth changes. This in turn allows bandwidth reservations to more quickly and more accurately reflect actual bandwidth usage. There are benefits to changing elements of the DAG without churn (i.e., "in-place"); however, occasionally, a change will have to be done in two steps (analogous to "make-before-break") to minimize traffic disruption.

Auto-bandwidth is a feature that adjusts (control plane) bandwidth reservations based on the measured (data plane) bandwidth sent through the MPTE DAG. With conventional RSVP-TE, this often results in a new path being computed and signaled (when the old path doesn't have enough bandwidth) with high concomitant churn; with MPTE, this can be accomplished in most cases without changing the "shape" of the DAG and thus much lower churn. Furthermore, with the multiplicity of paths in an MPTE DAG, this is greater latitude in how this can be accomplished, for example, by changing load balancing shares rather than by changing the actual bandwidth.

FIG. 8 is a block diagram illustrating an example network system 800 that implements example MPTE techniques in accordance with one or more aspects of this disclosure. Source network 12 and destination network 14 are similar to those described with respect to FIG. 1. Nodes 810-1-810-8 (collectively, "nodes 810") may be similar to nodes 10 of FIG. 1. Nodes 810 may be nodes of a network (not shown) similar to network 6 of FIG. 1. In contrast to FIG. 1, FIG. 8 does not separately show the TE links connecting nodes 810. Instead, an MPTED 815 for network system 800 is shown using edges (arrows) of MPTED 815 connecting nodes 810 of MPTED 815, along with a metric value x for the TE link corresponding to each edge, with the metric value denoted as {x}. A pair of nodes 810 may have 0 or more directional links between them. A link may have associated attributes; in particular, a metric.

Network system 800 optionally includes path computation element (PCE) 802. In general, PCE 802 may use traffic engineering and LSP state information learned from routers to apply constraints to compute network paths for MPLS traffic engineering LSPs (TE LSPs), optionally in response to requests from any of nodes 810 and/or autonomously. PCE 802 may be an application or other process executing on, for instance, a network node, a component of a network node, or an in-network or out-of-network system. PCE 802 may be a network controller, such as a software-defined networking (SDN) controller. To obtain traffic engineering information for storage in a traffic engineering database (not shown in FIG. 8), PCE 802 may execute one or more network routing protocols, extended to carry traffic engineering information, such as IGP-TE, to listen for routing protocol advertisements that carry such traffic engineering information. PCE 802 computes paths for TE LSPs by applying bandwidth and other constraints to learned traffic engineering information. A resulting path may be confined to a single domain or may cross several domains.

Nodes 810 may be members of a path computation domain served by PCE 6. The path computation domain may include, for example, an Interior Gateway Protocol (e.g., Open Shortest Path First (OSPF) or Intermediate System-to-Intermediate System (IS-IS)) area, an Autonomous System (AS), multiple ASes within a service provider network, multiple ASes that span multiple service provider networks.

In some examples, one or more of nodes 810 include a path computation client (PCC) that communicates with PCE 802 using a corresponding PCE communication protocol (PCEP) session. Reference herein to a PCC may additionally refer to the node that includes the PCC. A PCC is an application or other process executed by the node that establishes a PCEP session with which to delegate/request path computation from PCE 802 and receive data for creating, updating, or deleting computed paths. A PCEP session may operate over Transport Control Protocol (TCP) using a well-known port.

RSVP-TE (Resource Reservation Protocol with Traffic Engineering extensions) enables the setup of explicitly routed Label Switched Paths (LSPs) across an MPLS domain, allowing for fine-grained control over routing decisions based on available resources, QoS (Quality of Service) requirements, and administrative policies. Unlike traditional RSVP, which focuses on end-to-end resource reservation for unicast or multicast flows, RSVP-TE allows network operators to specify constraints (such as bandwidth, path affinity, or explicit hop-by-hop routes) and dynamically establish LSPs that satisfy those constraints. RSVP-TE operates in the control plane and interacts with the forwarding plane through signaling to allocate labels and configure forwarding tables along the path.

The setup of an LSP using RSVP-TE involves two primary message types: PATH and RESV. The PATH message is initiated by the ingress Label Edge Router (LER) and travels downstream along the desired LSP route, carrying information about the requested resources and constraints, including the explicit route object (ERO) that dictates the exact sequence of nodes the path should traverse. Each node processes the PATH message and stores state information for the session. Once the PATH message reaches the egress LER, a RESV message is generated and sent upstream. The RESV message confirms the reservation of resources along the reverse path, and at each hop, labels are assigned and communicated using label objects. This two-pass signaling mechanism ensures that resources are available end-to-end before committing to the LSP.

To route packets in a traffic trunk over a computed MPTED, a tunnel is typically used. Network system 800 signals the tunnel to the MPTED junction nodes. The tunnel may be MPLS- or IP-based, for example. A tunnel may or may not carry an entropy field and may or may not have a discriminator that allows for multiple tunnels between a pair of nodes.

In accordance with techniques of this disclosure, network system 800 implements one or more signaling protocols for signaling a multipath unicast tunnel (MPTE tunnel) across MPTED 815. An MPTE tunnel is a TE construct that contains a constrained set of paths representing MPTED 815. In other words, the MPTE tunnel is the signaled forwarding entity that carries the traffic from the one or more ingress nodes to the one or more egress nodes along MPTED 815. In the example of FIG. 8, only one ingress node 810-1 and one egress node 810-8 is shown for simplicity, but other examples of MPTED 815 may have multiple ingress nodes and/or multiple egress nodes. The paths that make up MPTE tunnel traverse the junction nodes 810, and the state associated with MPTED 815 at each of junction nodes 810 constitutes a set of previous-hops and a set of next hops over which traffic is load balanced equally or unequally. The MPTE tunnel may be realized over a Multiprotocol Label Switching (MPLS) forwarding plane or a native Internet Protocol (IP) v4/v6 forwarding plane using an appropriate tunnel type. Example tunnel types include IP-in-IP, Generic Routing Encapsulation (GRE), G-in-U, MPLS-in-UDP, SigLab (signaled label switching), or StatLab (static label). With SigLab, the labels to be used are signaled, and signaling proceeds from egress(es) to ingress(es). At each node, a different label (the discriminator) is used for each MPTED. With StatLab, a single statically assigned label defines the MPTE tunnel throughout the MPTED. As described in further detail below, a centralized or a distributed approach may be adopted for provisioning the MPTE tunnel.

As described above with respect to FIG. 1, the MPTED computer (MC) is the entity that computes an MPTED, such as any of nodes 810 (typically ingress node 810-1) or PCE 802. To instantiate an MPTE tunnel for MPTED 815 in nodes 810 via signaling, three steps are needed:
1. Provide the configuration of the MPTED (ingresses, egresses, constraints, etc.) and assign ownership of MPTED 815 to the tunnel originator (TO).
2. Compute MPTED 815 that satisfies the constraints. The computation of MPTED 815 is performed by the MPTED Computer (MC).
3. Signal the required information to nodes 810 constituting MPTED 815 to establish the MPTE tunnel. The signaling is performed by the Signaling Source (SS).

These three functions may be performed by one or more entities. Typical scenarios include:
- An ingress node (e.g., node 810-1) of MPTED 815 performs all three steps.
- An ingress node of MPTED 815 originates the tunnel, delegates computation of the MPTE DAG to PCE 802, receives the result, and signals the tunnel.
- PCE 802 originates the tunnel, computes the DAG and delegates signaling to an ingress node of the DAG.

Other scenarios with different combinations are possible.

In some examples, the MPTED Computer receives respective indications for whether nodes 810 are capable of supporting an MPTE tunnel. "IGP Routing Protocol Extensions for Discovery of Traffic Engineering Node Capabilities," RFC 5073, Internet Engineering Task Force, December 2007, describes IGP protocol extensions for the discovery of the TE capabilities of a node. RFC 5073 is incorporated by reference herein its entirety. One or more of nodes 810 may advertise one or more MPTE capabilities each relating to processing MPTE-related messages. MPTE-related messages may include MPTE RSVP-TE messages, MPTE PCEP messages, or MPTE BGP messages. MPTE-related messages are described in further detail below. The capability of a node to process any of the example MPTE-related messages may be signaled with a bit encoded in a TE Node Capability Descriptor defined in RFC 5073, for example:
- MR bit: when set, this flag indicates that the node can process MPTE RSVP-TE messages.
- MP bit: when set, this flag indicates that the node can process MPTE PCEP messages.
- MB bit: when set, this flag indicates that the node can process MPTE BGP messages.

As described above with respect to FIG. 1, each of junction nodes 810 of MPTED 815 receives junction data that indicates the respective shares of the incoming bandwidth of the traffic trunk that the junction node is to send on the one or more outgoing links of the junction node. Each of junction nodes 810 creates forwarding state based on its corresponding junction data for MPTED 815 and load balances the incoming bandwidth of the traffic trunk via its one or more outgoing links of MPTED 815. The signaling source may signal the corresponding junction data directly to each of the junction nodes 810 of MPTED 815, and each of the junction nodes 810 generates and stores forwarding information based on its corresponding junction data.

For example, FIG. 8 illustrates a scenario in which PCE 802 computes MPTED 815. The path computation result for the MPTED 815 may contain a set of unordered elements called junction elements (or more simply, "junctions"). Each ingress, transit, and egress node on MPTED 815 is a junction node and has a junction element associated with it. A junction element contains the junction data necessary to provision a specific junction node in the computed MPTED 815. Such junction data for a junction node includes the bandwidth coming in and going out of the junction, a list of previous hops, and a list of next hops with indications of corresponding load balancing splits at the junction node. The control plane state provisioned on a junction node for a given MPTE tunnel may be referred to as the Junction State Block (JSB). States pertaining to the junction PHOPs and junction NHOPs contained in the JSB may be referred to as JSB-PHOPs and JSB-NHOPs, respectively.

PCE 802 provides the junction elements in message 821 to the signaling source, in this case node 810-1. In some cases, PCE 802 is the signaling source. Node 810-1, as the signaling source, sends the corresponding junction element to each of the nodes 810 of MPTED 815. For example, node 810-1 sends message 807, including the junction element for node 810-5, to node 810-5. Message 807 is an example of a Source to Junction (S2J) message. Node 810-5 processes the junction element and installs forwarding state for MPTED 815. Node 810-5 may send message 809 to node 810-1, as the signaling source, to indicate a status of the junction implemented by node 810-5. Message 809 is an example of a Junction to Source (J2S) message. To facilitate provisioning of the MPTE tunnel for MPTED 815, node 810-5 sends message 817 including label L2 to upstream node 810-2. Node 810-2 sends packets classified to the MPTE tunnel for MPTED 815 with label L2 to identify such packets to node 810-5. Node 810-5 swaps the label L2 with the label received from node 810-8 for the MPTE tunnel for MPTED 815. Message 817 is an example of a Junction to Junction (J2J) message.

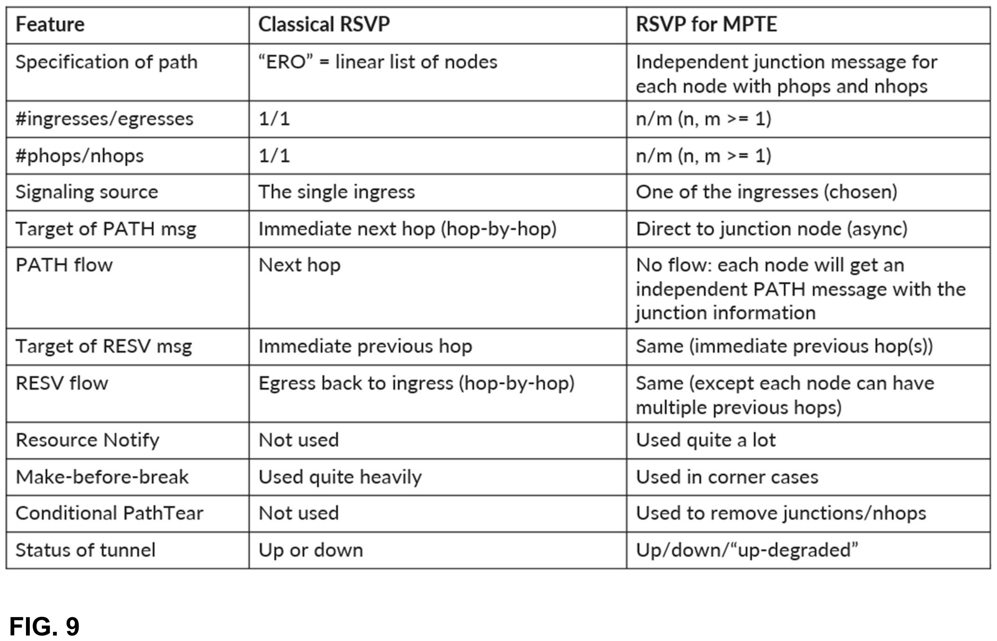

MPTE RSVP TE thus supports signaling of MPTE tunnels by the signaling source and junction nodes. MPTE RSVP TE differs from conventional ("classical") RSVP TE in a number of ways. These are shown in FIG. 9. Unlike conventional RSVP TE that relies on a PATH message forwarded by the nodes along the path for an LSP, MPTE RSVP TE ("RSVP for MPTE") specifies the paths for an MPTE tunnel with independent junction messages (e.g., message 807) sent from the signaling source directly to the respective junction nodes / LERs. This may reduce a number of signaling message versus relying on RSVP PATH messages that proceed hop-by-hop along the path for an LSP or paths for a P2MP LSP, for the various potential paths along an MPTE tunnel will include multiple paths that traverse the same node. (Note: Although they differ from conventional RSVP PATH messages, the junction messages sent to junction nodes may be referred to as MPTE PATH ("M-Path") messages.) MPTE RSVP TE may also facilitate multiple ingress nodes and/or egress nodes for an MPTE tunnel and may also allow for multiple previous hops (phops) and/or next hops (nhops). [A junction node v includes v, its previous hops and its next hops. A phop may be specified by an incoming link of v: (u, v, oif1); an nhop may be specified by an outgoing link of v:

### (v, w, oif2).]

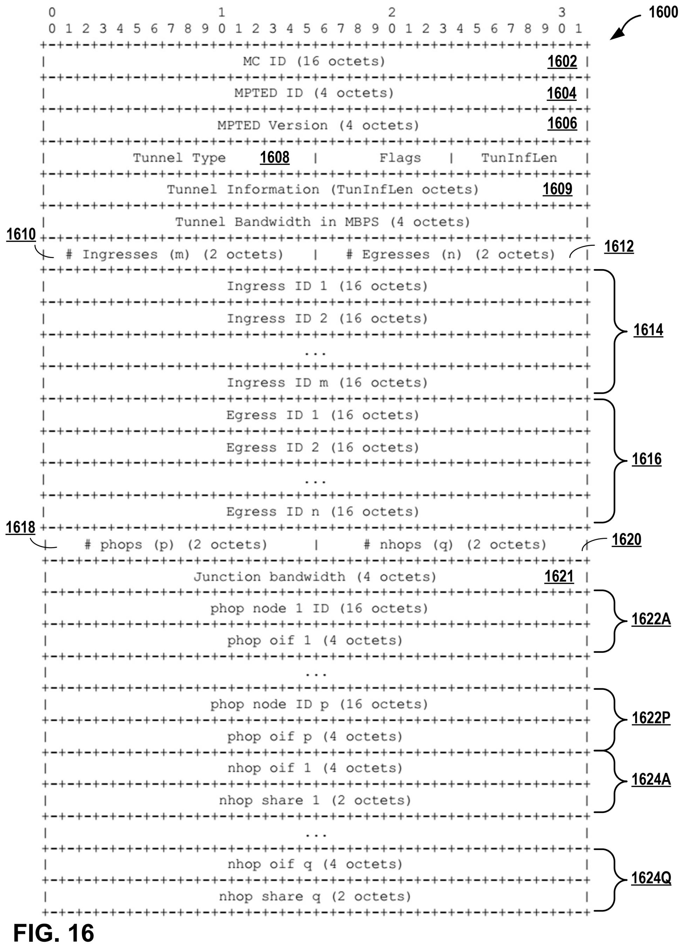

An example message for providing junction data to a junction node is shown and described with respect to FIG. 16.

FIG. 9 lists a chosen one of the ingresses as the signaling source for an MPTE tunnel, but other systems such as PCE 802 may function as the signaling source in some examples.

The following describes an example setup process for an MPTE tunnel for MPTED 815. Example details for steps of this process and messages are described in more detail below with respect to RSVP-TE extensions. M-Path, M-Resv, and M-Notify are MPTE RSVP TE variants of the conventional RSVP Path, Resv, and Notify messages, respectively. In this example, node 810-1 is the signaling source.

### Step 1

Node 810-1 computes (or receives from PCE 802) the set of junction elements for MPTED 815.

### Step 2

Node 810-1 sends an M-Path message to each of nodes 810-2 to 810-8. Each M-Path message includes the junction element specific to the intended node. Message 807 is an example of an M-Path message. Node 810-1 also processes its own junction element, which may include constructing a JSB, and waits for an M-Resv from each of downstream nodes 810-2 and 810-3.

### Step 3

Each of transit nodes 810-2 to 810-7 receives its corresponding M-Path message, processes the junction element (which may include constructing a JSB), and waits for M-Resv messages from each of its next hops specified in the junction element.

### Step 4

Egress node 810-8 receives its corresponding M-Path message and processes the junction element (which may include constructing a JSB). The junction element indicates nodes 810-5, 810-6, and 810-7 are previous hops, and egress node 810-8 therefore sends an M-Resv to each of nodes 810-5, 810-6, and 810-7 with an implicit NULL label (used for penultimate hop popping).

### Step 5

Each of transit nodes 810-2 to 810-7 is waiting for M-Resv messages from each of its next hops specified in its received junction element. For any such node, once all awaited M-Resv messages are received, the node (1) allocates a corresponding label for each of its previous hops specified in its received junction element, (2) sends respective M-Resv messages to the previous hops with respective allocated labels, (3) programs a corresponding route with forwarding information that maps the allocated labels to the next hops (with the corresponding received labels from those next hops), and (4) sends an M-Notify to node 810-1. An example route for node 810-4 is:
L2, L3 → { 810-5:L5:BWShare_1, 810-6:L6:BWShare_2, 810-7:L7:BW_Share_3 } where:
- L2 and L3 are labels allocated by node 810-4 and sent in M-Resv messages to nodes 810-2 and 810-3, respectively;
- L5 is the label received by node 810-4 from node 810-5;
- L6 is the label received by node 810-4 from node 810-6;
- L7 is the label received by node 810-4 from node 810-7;
- BWShare_n is the share of traffic for the route to be output on the next hop [Node]: [Label]

Node 810-4 therefore outputs a BWShare_1 share of traffic received with labels L2 or L3 to node 810-5 and labels the packets output to node 810-5 with label L5, and similarly for the shares of traffic to nodes 810-6 and 810-7.

### Step 6

Ingress node 810-1 is waiting for M-Resv messages from each of its next hops specified in its received junction element. Once all awaited M-Resv messages are received, node 810-1 programs a tunnel route for packets classified to the MPTE tunnel. The tunnel route next hops may be similar to those described in the above example for node 810-4. If it is not the signaling source, ingress node 810-1 may notify the signaling source.

### Step 7

The setup sequence is complete when node 810-1 receives confirmation of junction provisioning via an M-Notify message from all junction nodes. In some examples, if all junctions indicate the junction is "UP", then the MPTE tunnel for MPTED 815 is deemed "UP".

The following describe additional details of RSVP-TE extensions that may be used for signaling MPTED tunnels, in accordance with techniques of this disclosure. ("MPTED tunnel" and "MPTE tunnel" are equivalent terms.) The described RSVP-TE extensions may be used in some example aspects of techniques of this disclosure.

An MPTED tunnel is a Traffic Engineering (TE) construct that contains a constrained set of paths representing an optimized Directed Acyclic Graph (DAG) from one or more ingresses to one or more egresses. The paths that make up an MPTED tunnel traverse a set of junction nodes, and the state associated with the MPTED at each junction node constitutes a set of previous-hops and a set of next-hops over which traffic is load balanced in a weighted fashion. Provisioning an MPTED tunnel in a TE network using a signaling protocol involves provisioning control and forwarding plane state at each junction node. As a signaling protocol, RSVP-TE is widely deployed for provisioning point-to-point (P2P) TE tunnels [RFC3209] and point-to-multipoint (P2MP) TE tunnels [RFC4875]. Extensions to RSVP-TE for use as a signaling protocol to provision MPTED tunnels are described below. MPTED tunnels provisioned using RSVP-TE are referred to as RSVP MPTED Tunnels. An MPTED tunnel may be realized over a Multiprotocol Label Switching (MPLS) forwarding plane or a native Internet Protocol (IP) v4/v6 forwarding plane using an appropriate tunnel type. Depending on the deployment needs, a centralized or a distributed approach may be adopted for provisioning an MPTED tunnel. RSVP-TE protocol may be extended to facilitate distributed provisioning of MPTED Tunnels over an MPLS forwarding plane in an intra-domain TE network.

There is a pre-existing approach to combine TE and multipath using an "RSVP Multipath Traffic Engineered Container (MPTEC) tunnel". An MPTEC contains multiple dynamically created and individually signaled single-path RSVP P2P tunnels. These member tunnels are dynamically added and removed from the container tunnel at the ingress depending on the amount of traffic steered onto it. Though the container tunnel offers a viable option for facilitating the load balancing of unicast traffic across a constrained set of paths individually optimized for a specific objective, the requirement to individually signal and maintain member LSP state can be a deterrent in specific scaled deployments.

A key differentiator for an MPTED tunnel over an MPTEC tunnel is that with an MPTED tunnel, traffic is load-balanced across the next hops at each junction node in the DAG (in a weighted fashion), whereas with an MPTEC tunnel, traffic is load-balanced only at the ingress node (and typically equally balanced among the next hops). Another differentiator is that the amount of signaling needed to set up the tunnel is significantly less for the MPTED tunnel compared to the MPTEC tunnel. Finally, a MPTEC tunnel has exactly one ingress and one egress, but an MPTED tunnel can have more than one ingress and/or egress with relatively little extra state; this feature may be particularly useful in BGP and multi-homed VPN deployments.

### MPTED Tunnels: Overview of Operation

To instantiate an MPTE tunnel in a network via signaling, three steps are performed:
1. Provide the configuration of the MPTED (ingresses, egresses, constraints, etc.) and assign ownership of the DAG to the tunnel originator (TO).
2. Compute an MPTE DAG that satisfies the constraints. This function is undertaken by the MPTE Computer (MC).
3. Signal the required information to the network elements constituting the DAG to establish the tunnel.

This task is undertaken by the Signaling Source (SS). These three functions may be performed by one or more entities. Typical scenarios include:
1. An ingress node of the MPTE DAG does all three functions.
2. An ingress node of the MPTE DAG originates the tunnel, delegates computation of the DAG to a PCE [RFC5440], receives the result and signals the tunnel.
3. A PCE originates the tunnel, computes the DAG and delegates signaling to an ingress node of the DAG. Other combinations are possible.

The subsections that follow describe each function; the next section describes signaling in greater detail.

### MPTED Tunnel Originator

The tunnel originator (TO) for an MPTED tunnel is typically an ingress of the DAG; however, any node on the DAG can be the TO. In scenarios where the MPTED tunnel has multiple ingress nodes, one of the ingress nodes may be designated as the TO. In deployments where a stateful Path Computation Element (PCE) ([RFC8231], [RFC8281]) model is used to initiate the setup of RSVP MPTED tunnels, the TO is the PCE.

### Identification

The TO is responsible for the identity of an MPTED tunnel. An MPTED tunnel may be uniquely identified by the 2-tuple: <MPTED Originator ID (MPTED OID), MPTED ID>. The MPTED OID may be the IP (v4/v6) (e.g., loopback) address of the TO. An MPTED ID may be an unsigned 32-bit positive integer unique to each DAG in the namespace of the MPTED originator (the value 0 is reserved).

### Path Computation

An MPTED may be computed by a path computation engine locally on the TO or by a PCE. In either case, the Traffic Engineering Database (TED) used by the path computation engine may be augmented with information indicating whether a topological element supports MPTED tunnel provisioning via RSVP-TE. A path computation request for an MPTED may carry an MPTED tunnel ID, a set of ingress nodes, a set of egress nodes, a set of constraints, and an optimization objective. The path computation result for the MPTED contains a set of unordered elements called JUNCTIONs. This set may be communicated to the SS so that the MPTED tunnel can be signaled.

### JUNCTION

Each ingress, transit, and egress node on the DAG is a junction and has a JUNCTION element associated with it. A JUNCTION element contains the information necessary to provision a specific junction node in the computed DAG. Junction nodes in the computed DAG may or may not be MPTED RSVP capable. The information carried in a JUNCTION element may include the bandwidth coming in and going out of the junction, a list of previous-hops (JCT-PHOPs), and a list of next-hops (JCT-NHOPs).

### MPTED Signaling Source (SS)

An MPTED SS may be responsible for creating, maintaining and ultimately destroying an MPTE tunnel. It is provided an MPTED tunnel ID and a set of JUNCTIONs. If signaling is successful, it communicates back to the TO that the tunnel is ready for traffic.

### Versioning

The provisioned state associated with the MPTED tunnel may change over time, with each instance of the MPTED tunnel getting assigned a version number (MPTED version). An MPTED tunnel instance may be uniquely identified by the 3-tuple <MPTED OID, MPTED ID, MPTED version>. The MPTED version may be managed by the SS.

### Label Allocation

There are various multiple label allocation schemes for realizing MPTED tunnels over an MPLS forwarding plane. Given the presence of a signaling plane, a "Signaled Label Switching (SigLab)" approach may be used for RSVP MPTED tunnels.

### JUNCTION State Block (JSB)

The control-plane state provisioned on a junction node for a given MPTED Tunnel is referred to as the JUNCTION State Block (JSB). The states pertaining to the JCT-PHOPs and JCT-NHOPs contained in the JSB are referred to as JSB-PHOPs and JSB-NHOPs, respectively.

**Tunnel Status** An MPTED tunnel is deemed "Up" if all the junction nodes are provisioned as requested. The tunnel is deemed "Up - Degraded" if some (but not all) paths in the DAG are available for carrying the end-to-end traffic. The tunnel is deemed "Down" if there are no paths in the DAG available for carrying the end-to-end traffic. Based on the difference between the requested bandwidth and the actual reserved bandwidth on the DAG, local policy on the tunnel originator will determine if the MPTED Tunnel should be deemed "Active" (available for traffic to be placed on it) or not.

### In-Place Update vs Make-Before-Break

Unless there is a change to the set of constraints used, or an addition or deletion of topological elements, the shape of the computed DAG will remain unchanged over the life of an MPTED tunnel. If the shape of the DAG does not change, the updates to an MPTED tunnel are localized to the bandwidth allotted to the JUNCTION and the relative load shares on the JCT-NHOPs. In such a scenario, the update is carried out in-place and is accompanied by a corresponding version change. Suppose the shape of the DAG changes for some inevitable reason, meaning there is an addition or deletion of JUNCTIONs or an addition or deletion of JCT-PHOPs/JCT-NHOPs. In that case, the in-place update to the tunnel may cause temporary traffic disruption. Hence, there may be a need to adopt a make-before-break approach to updating the tunnel if the shape of the DAG changes.

### Signaling for Junction Management

Signaling messages are classified into the following categories: (Signaling) Source to Junction node (S2J), Junction node to (Signaling) Source (J2S), Junction to Junction (J2J). The underlying RSVP-TE messages used to transmit these messages are analogous to those used in [RFC3209], but are prefixed with M- to distinguish them.

### Source to Junction (S2J) Messages

These are messages signaled from the SS to a junction node on the DAG. The junction node may be an ingress, a transit, or an egress node on the DAG.

### JunctionCreate

An S2J JunctionCreate message may be used to trigger the instantiation of the "JUNCTION" state on a junction node. Each such message has a version number encoded within it, which identifies the instance of the "JUNCTION" being created. This document leverages the use of RSVP MPTED Path (M-Path) message to function as an S2J JunctionCreate message.

### JunctionUpdate

An S2J JunctionUpdate message is used to trigger the modification of "JUNCTION" state on a junction node. The version number encoded within the message identifies the instance of the "JUNCTION" being modified. The elements of the existing "JUNCTION" entry from the old instance that are no longer part of the DAG are locally tagged as candidates for deletion and remain active until explicitly instructed to do so. This document leverages the use of RSVP MPTED Path (M-Path) message to function as an S2J JunctionUpdate message.

### JunctionDelete

An S2J JunctionDelete message may be used to trigger the deletion of the JUNCTION state on a junction node. The message MAY include an instruction to initiate sending a J2J JunctionDelete message to each associated next hop. This document leverages the use of RSVP MPTED PathTear (M-PathTear) message to function as an S2J JunctionDelete message.

### Junction to Source (J2S) Messages

These are messages signaled from a junction node to the SS.

### JunctionNotify

A J2S JunctionNotify message is used to notify the SS of the status of the junction. This message may be sent as a response to an S2J message or be sent unsolicited. This document leverages the use of RSVP MPTED Notify (M-Notify) message to function as a J2S JunctionNotify message.

### ResourceNotify

The ResourceNotify message may be used to notify the SS of the loss or degradation of an associated resource (e.g., TE link going down, maximum bandwidth on the TE link going down). This document leverages the use of RSVP ResourceNotify message to function as a J2S ResourceNotify message.

**Junction to Junction (J2J) Messages:** These are messages exchanged between immediately adjacent junction nodes.

### Upstream (J2JU) Messages

### JunctionNextHopReservation

The J2JU JunctionNextHopReserve message may be sent to an immediate upstream junction node and is used to facilitate (a) ordered programming of labeled routes at each junction node on the DAG, (b) ordered admission control and bandwidth reservation on traversed TE links, and (c) ordered addition of next hops when changing the shape of the DAG. This document leverages the use of RSVP MPTED Resv (M-Resv) message to function as a J2JU JunctionNextHopReservation message.

### Junction Down

The J2JU JunctionDown message is used to notify an immediate upstream junction node of the local junction state going "Down". This document leverages the use of RSVP M-Notify message to function as a J2JU JunctionDown message.

### Downstream (J2JD) Messages

### Junction Delete

The J2JD JunctionDelete message may be sent to a JUNCTION next-hop to delete the state, with the condition that the deletion will be propagated further downstream only for next-hops already marked for deletion. This document leverages the use of RSVP M-PathTear message to function as a J2JD JunctionDelete message.

### RSVP Messages

### MPTED Path (M-Path) Message

An M-Path message is an S2J message that is used for creating or updating control and forwarding plane state associated with an MPTED tunnel on a specific junction node. The M-Path message includes one or more of the following information: MPTED tunnel identifier, MPTED tunnel instance identifier, MPTED tunnel name, Setup/Hold Priority, Label type, Junction information - identifier, bandwidth, phops, and nhops with their relative load-shares.

When a non-egress junction node receives an M-Path message for a new JUNCTION state, it constructs a JSB with the associated JSB-NHOPs and JSB-PHOPs using the information encoded in the message. If the non- egress junction node receives an M-Path for an existing JUNCTION state with a version change, it updates the corresponding JSB using the information encoded in the message. The JSB update may involve adding new JSB-NHOPs and JSB-PHOPs and marking JSB-NHOPs and JSB- PHOPs that are no longer part of the JUNCTION state as candidates for deletion. After the JSB is constructed or updated, the non-egress junction node waits for an M-Resv message to be received from each available JCT-NHOP.

When an egress junction node receives an M-Path message for a new JUNCTION state, it constructs a JSB, assigns a label for each JCT- PHOP, and programs the forwarding plane state, thus completing the JUNCTION provisioning at the egress. If the egress junction node receives an M-Path message for an existing JUNCTION state, it updates the corresponding JSB using the information encoded in the message. The JSB update may involve adding new JSB-PHOPs, and marking JSB-PHOPs that are no longer part of the JUNCTION state as candidates for deletion. After the JSB is constructed/updated, the egress junction node sends an MPTED Resv (M-Resv) message to each JCT-PHOP, and an MPTED Notify (M-Notify) message directly to the tunnel signaling source.

```
  <M-Path Message> ::= <Common Header> [<INTEGRITY>]
 [ [<MESSAGE_ID_ACK> | <MESSAGE_ID_NACK>] ... ]
 [ <MESSAGE_ID> ]
 <SESSION> [<END_POINTS>]
 <TIME_VALUES> <VERSION>
 <LABEL_REQUEST> <SESSION_ATTRIBUTE>
 <junction-descriptor>
 <junction-descriptor> ::= <JUNCTION> <junction-elements>
 <junction-elements> ::= ( <JUNCTION_PHOPS> | <JUNCTION_NHOPS> |
 ( <JUNCTION_PHOPS> <JUNCTION_NHOPS> ))
```

### MPTED Resv (M-Resv) Message

An M-Resv message is a J2J message that is used to signal the label that an upstream junction node needs to program for a specific next hop. The M-Resv message includes one or more of the following information: MPTED tunnel identifier, MPTED tunnel instance identifier, Hop specific information - Hop identifier, Label, and MTU.

When a transit junction node receives an M-Resv message from all available JCT-NHOPs, it performs admission control, assigns a label to each JCT-PHOP, programs the forwarding plane state, and sends an M-Resv message to each JCT-PHOP and an M-Notify message directly to the tunnel signaling source. No message is sent out until M-Resv messages from all available JCT-NHOPs have been received and processed.

When an ingress junction node receives an M-Resv message from all available JCT-NHOPs, it performs admission control, programs the forwarding plane state, and notifies the tunnel signaling source.

```
  <M-Resv Message> ::= <Common Header> [ <INTEGRITY> ]
 [ [<MESSAGE_ID_ACK> | <MESSAGE_ID_NACK>] ... ]
 [ <MESSAGE_ID> ]
 <SESSION>
 <TIME_VALUES> <VERSION>
 <junction-labeled-hops-list>
 <junction-labeled-hops-list> ::= <JUNCTION_LABELED_HOP> [ <junction-labeled-
 hops-list> ]
```

### MPTED Pathtear (M-PathTear) Message

An M-PathTear message may be used as either an S2J message or a J2J message. When an S2J M-PathTear is used for deleting the state on a junction node, the message includes one or more of the following information: MPTED tunnel identifier, MPTED tunnel instance identifier, and optionally, an instruction to propagate the deletion request downstream.

When a junction node receives an S2J M-PathTear message, it deletes the matching JSB. It sends an M-Notify message to the tunnel signaling source, indicating that the junction deletion is complete. If the M-PathTear carries an optional instruction to propagate the deletion further downstream, the junction node sends a J2J M-PathTear to each associated JCT-NHOP before deleting the JSB. When a J2J M-Pathtear is used for deleting a specific hop state on a downstream junction node, the message includes one or more of the following information: MPTED tunnel identifier, MPTED tunnel instance identifier, Hop identifier

During the make-before-break update of an MPTED tunnel, when a junction node completes updating all JCT-PHOPs matching the new version, and determines that there are no JCT-PHOPs pending deletion, it checks if there are any JCT-NHOPs marked for deletion. If such JCT-NHOPs exist, the junction node sends a J2J M-PathTear for each of those JCT-NHOPs with the old version. When a junction node receives a J2J M-PathTear, it cleans up the corresponding JCT-PHOP state. If there are no other JCT-PHOPs, then it cleans up the JSB and propagates the J2J M-PathTear to each associated JCT-NHOP. If there are other JCT-PHOPs present, but none of them are pending deletion, then it propagates the J2J M-PathTear only to those JCT-NHOPs that have already been marked for deletion.

```
  <M-PathTear Message> ::= <Common Header> [ <INTEGRITY> ]
 [ [<MESSAGE_ID_ACK> | <MESSAGE_ID_NACK>] ... ]
 [ <MESSAGE_ID> ]
 <SESSION> <VERSION>
 [ <JUNCTION_HOP> ] | [ <CONDITIONS> ]
```

### MPTED Notify (M-Notify) Message

An M-Notify message may be used as either a J2S message or a J2J message. A junction node sends a J2S M-Notify message to the tunnel signaling source to indicate the status of the junction. A junction node may send a J2S M-Notify message in response to an S2J message or unsolicited. A J2S M-Notify message includes one or more of the following information: MPTED tunnel identifier, MPTED tunnel instance identifier, MTU, and Status.

If the Status is not "Degraded", the M-Notify message includes one or more of the following additional information: Reserved bandwidth on the junction, a List of JCT-PHOPs that are "Down", and a List of JCT-NHOPs that are "Down/Degraded" and the reserved bandwidth on each corresponding TE link.

A junction node sends a J2J M-Notify message to the upstream junction node to indicate that it is "Down". A J2J M-Notify message includes one or more of the following information: MPTED tunnel identifier, MPTED tunnel instance identifier, Hop Identifier, and Status.

When an upstream junction node receives a J2J M-Notify indicating that the junction on the specified JCT-NHOP is "Down", it sets the load-share on the JCT-NHOP to "zero" and reprograms the labeled routes.

```
  <M-Notify Message> ::= <Common Header> [<INTEGRITY>]
 [ [<MESSAGE_ID_ACK> | <MESSAGE_ID_NACK>] ... ]
 [ <MESSAGE_ID> ]
 <SESSION> <VERSION>
 (<JUNCTION_HOP_STATUS> | <junction status descriptor>)
 <junction status descriptor> ::= <JUNCTION_STATUS> [ <degraded junction-
 elements> ]
 <degraded junction-elements> ::= ( <JUNCTION_PHOPS> | <JUNCTION_NHOPS> |
 ( <JUNCTION_PHOPS> <JUNCTION_NHOPS> ))
```

### Resource Notify (RsrcNotify) Message

A RsrcNotify is a J2S message that is used to notify the tunnel signaling source of link unavailability or degradation. A RsrcNotify message includes one or more of the following information: a list of unavailable resources, and a list of degraded resources. When a TE link goes down, the junction node sends a RsrcNotify to notify each impacted tunnel signaling source that the specified TE link is no longer available. When the maximum reservable bandwidth of a TE link is reduced (for example, a member link on an Aggregate Ethernet link fails), the junction node selects a set of impacted tunnel signaling sources and notifies them that the specified TE link has diminished capacity. In this scenario, the information carried in the RsrcNotify message may be customized for the recipient. It may include the amount of per-priority bandwidth usage that the tunnel signaling source would need to reduce on that TE link.

```
 <ResourceNotify Message> ::= <Common Header> [<INTEGRITY>]
 [ [<MESSAGE_ID_ACK> | <MESSAGE_ID_NACK>] ... ]
 [ <MESSAGE_ID> ]
 ( <unavailable-resources> | <degraded-resources> | ( <unavailable-resources>
 <degraded-resources> ))
 <unavailable resources> ::= (( <RESOURCE_SPEC> <unavailable resources> ) |
 <RESOURCE_SPEC> )
 <degraded resources> ::= (( <DEG_RESOURCE_SPEC> <degraded resources> ) |
 <DEG_RESOURCE_SPEC>)
```

The above additional details of RSVP-TE extensions are applicable to some aspects of techniques of this disclosure.

PCEP allows a PCC to request path computations from PCE 802 for traffic-engineered tunnels, such as MPLS-TE or Segment Routing (SR) LSPs, and the PCE can reply with computed paths or updates to existing paths. The protocol supports path requests, responses, reporting, and even stateful control (where the PCE maintains LSP state and can actively initiate path updates). PCEP enhances scalability and flexibility in large or complex networks by offloading path computation from routers and enabling centralized, policy-driven routing decisions. PCEP is described, e.g., in RFC 5440, "Path Computation Element (PCE) Communication Protocol (PCEP)," March 2009; and in RFC 8231, "Path Computation Element Communication Protocol (PCEP) Extensions for Stateful PCE," September 2017; each of which is incorporated by reference herein in its entirety.

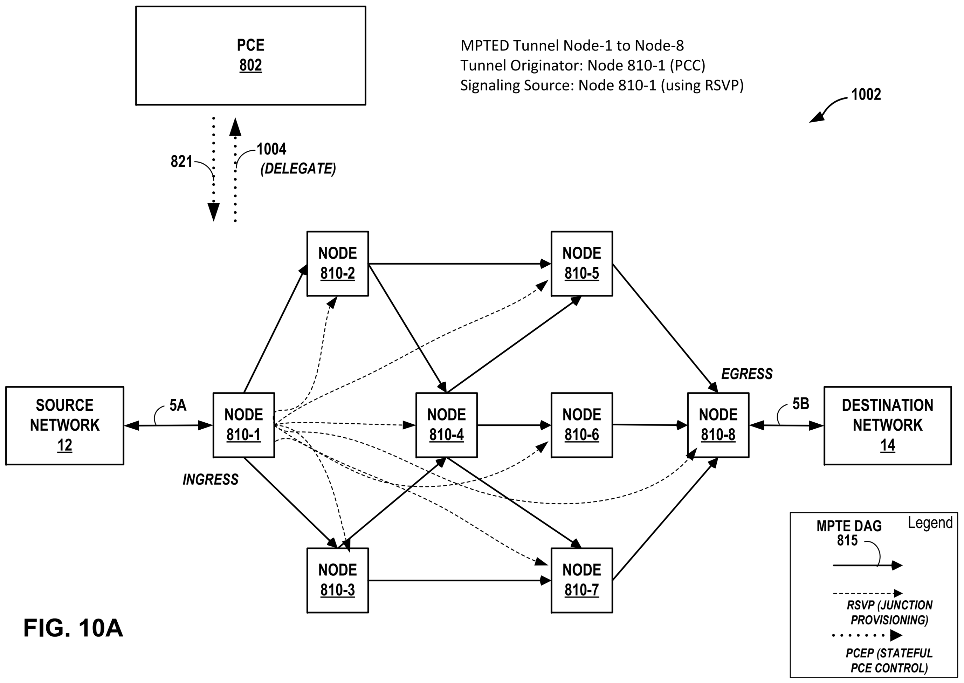

FIGS. 10A-10D are block diagrams of a network system in which PCE 802 and node 810-1 operating as a path computation client (PCC) communicate using Path Computation Element Communication Protocol (PCEP) extended to support MPTE techniques and to support delegation of control of MPTED 815 from node 810-1 to PCE 802, in accordance with one or more aspects of this disclosure. FIGS. 10A-10D illustrate the provisioning of an MPTE tunnel in a TE network using PCEP in a stateful PCE model.

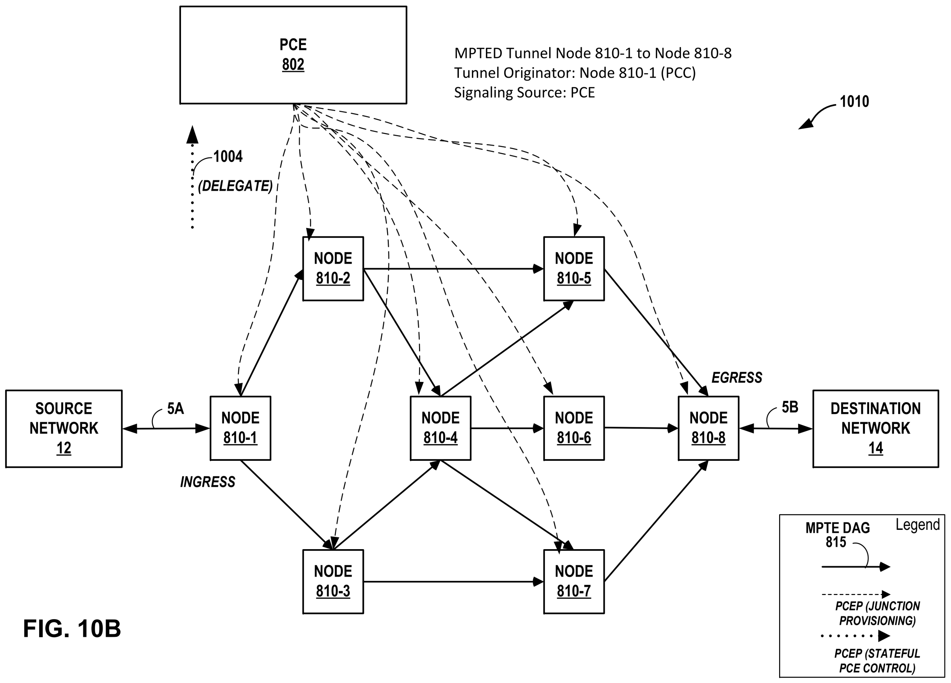

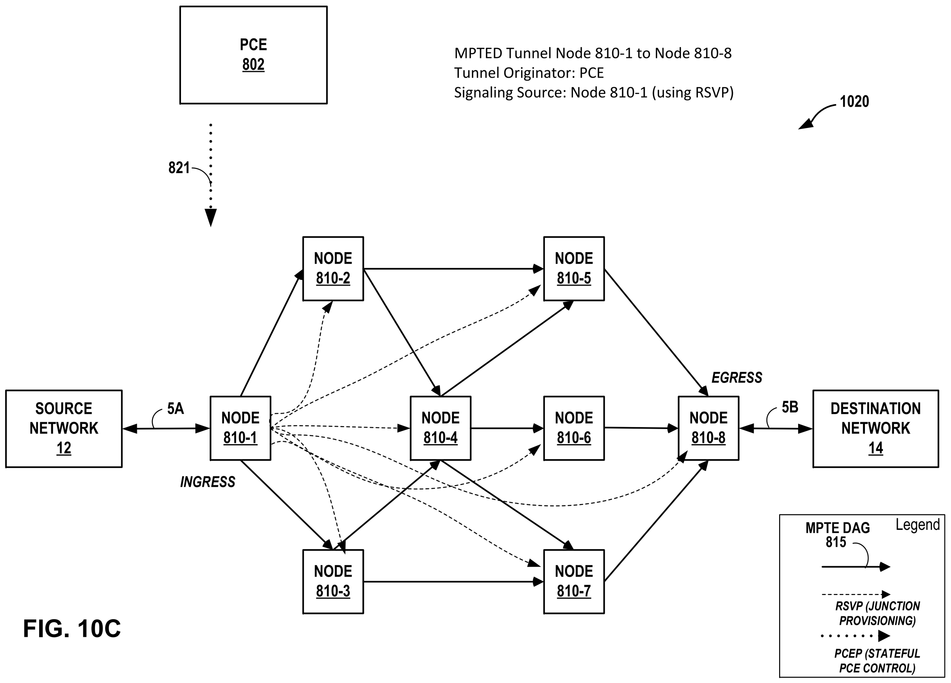

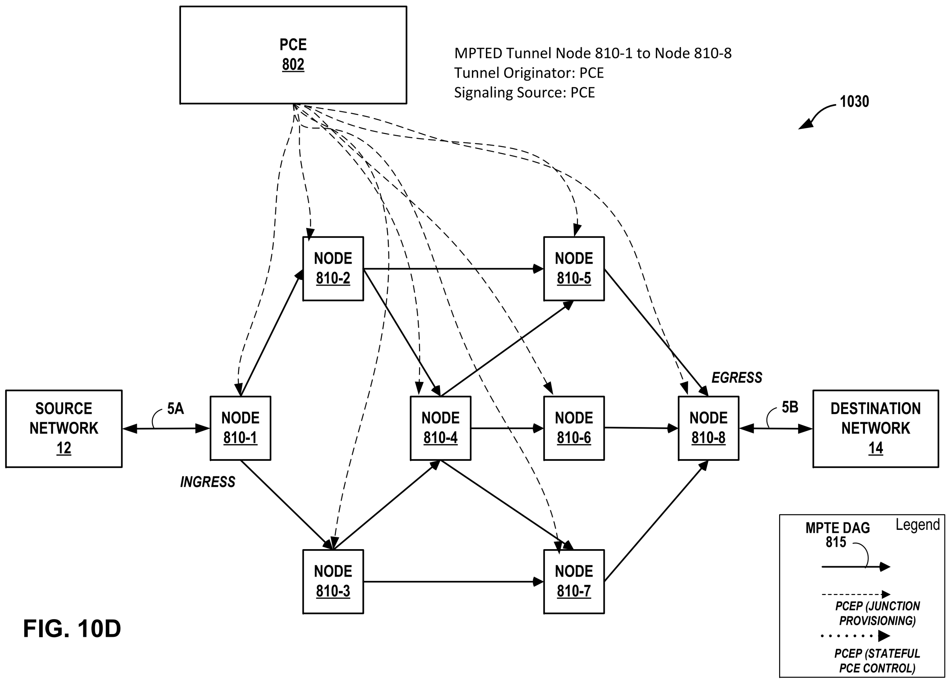

There are four modes of operation illustrated, although other modes may be implemented. FIGS. 10A and 10B illustrate PCC-initiated MPTE tunnels with node 810-1 (the PCC) as the signaling source (FIG. 10A) and PCE 802 as the signaling source (FIG. 10B). FIGS. 10C and 10D illustrate PCE-initiated MPTE tunnels with node 810-1 (the PCC) as the signaling source (FIG. 10C) and PCE 802 as the signaling source (FIG. 10D). Node 810-1 and PCE 802 may engage in a PCEP initialization phase, also known as PCE-Init messaging.

In network system 1002 of FIG. 10A, node 810-1 is the tunnel originator and delegates, via a PCEP session with PCE 802 using PCEP message 1004, control of MPTED 815 to PCE 802. Node 810-1 may provide a description of the MPTE, including a list of one or more ingresses, a list of one or more egresses, one or more constraints, etc., to PCE 802 via the PCEP session. In some examples, node 810-1 provides the description of the MPTE in a PCEP PCReq(uest) message modified to include the MPTE description. The PCReq is a path computation request for an MPTED. The MPTE description in the PCReq message may be specified using one or more objects that specify the set of constraints and attributes for the MPTED to be computed by PCE 802.

PCE 802 computes MPTED 815 and provides the junction elements in message 821 to the signaling source, in this case node 810-1. Using a process similar to that described with respect to FIG. 8, node 810-1 sends the corresponding junction element to each of the nodes 810 of MPTED 815 in direct messages (such as message 807). The process may include RSVP-based junction provisioning, which may be implemented in some aspects as described in further detail above.

Accordingly, in network system 1002 of FIG. 10A:
- PCC originates the tunnel and delegates control of the DAG to PCE.
- PCE computes the DAG and provides PCC a list of junctions.
- PCC signals and provisions each junction node using RSVP.
- After the RSVP signaling sequence is complete, PCC notifies the PCE of the status of each junction.
- The MPTE tunnel setup is deemed complete on the PCE when all junction reports are received from the PCC.
- This mode can be used for setting up RSVP MPTE tunnels that offload DAG computation to the PCE.

In network system 1010 of FIG. 10B, PCE 802 is the signaling source. As with FIG. 10A, node 810-1 delegates control of the MPTE to PCE 802. PCE 802 may establish PCEP sessions with each of nodes 810. After computing MPTE DAG 815, PCE 802 sends, via the corresponding PCEP sessions, the corresponding junction element to each of the nodes 810 of MPTED 815 in direct messages. Such messages may be similar to message 807 and include the junction element needed by the receiving node 810 to create the junction state block to perform forwarding for MPTE DAG 815. The messages may not be RSVP messages. However, non-ingress nodes 810 may use RESV messages to provide labels for the MPTE tunnel for MPTE DAG 815, as described with respect to FIG. 8.

Accordingly, in network system 1010 of FIG. 10B:
- PCC originates the tunnel and delegates control of the DAG to PCE.
- PCE computes the DAG and arrives at a list of junctions.
- PCE signals and provisions each junction node using PCEP.
- The MPTE tunnel setup is deemed complete on the PCE when junction reports are received from each junction node.
- This mode is used for setting up PCEP MPTE tunnels. It can be used for setting up the MPTE tunnel over an SR-MPLS forwarding plane.

In network system 1020 of FIG. 10C, PCE 802 is the tunnel originator and node 810-1 is the signaling source. As with network system 1002 of FIG. 10A, PCE 802 provides the junction elements in message 821 to node 810-1, which sends direct messages with the corresponding junction elements to the non-ingress nodes 810 (again, similar to network system 1020).

Accordingly, in network system 1020 of FIG. 10C:
- PCE originates the tunnel.
- PCE computes the DAG and initiates the setup process by providing PCC a list of junctions.
- PCC signals and provisions each junction node using RSVP.
- After the RSVP signaling sequence is complete, PCC notifies the PCE of the status of each junction.
- The MPTE tunnel setup is deemed complete on the PCE when all junction reports are received from the PCC.
- This mode can be used for setting up RSVP MPTE tunnels that offload DAG computation to the PCE.

In network system 1030 of FIG. 10D, PCE 802 is the tunnel originator and the signaling source. Using a process similar to that describes with respect to network system 1010 of FIG. 10B, PCE 802 computes MPTED 815 and sends, via the corresponding PCEP sessions, the corresponding junction element to each of the nodes 810 of MPTED 815 in direct messages.

Accordingly, in network system 1020 of FIG. 10C:
- PCE originates the tunnel.
- PCE computes the DAG, arrives at a list of unordered junctions and initiates the setup process.
- PCE signals and provisions each junction node using PCEP.
- The MPTE tunnel setup is deemed complete on the PCE when junction reports are received from each junction node.
- This mode is used for setting up PCEP MPTE tunnels. It can be used for setting up the MPTE tunnel over an SR-MPLS forwarding plane.

PCEP may be extended in the following ways:
Extend "Capability Negotiation" [RFC8231] procedure
- MPTED provisioning modes
- Extensions to Open Message

Extend "Stateful PCE" [RFC8231][RFC8281] procedures to delegate / initiate MPTE tunnels
- Extensions to Report, Update, and LSP Initiate Request messages

Add PCEP signaling procedures to provision and manage junction nodes
- Extensions to Report, Update, LSP Initiate Request, and Notification messages

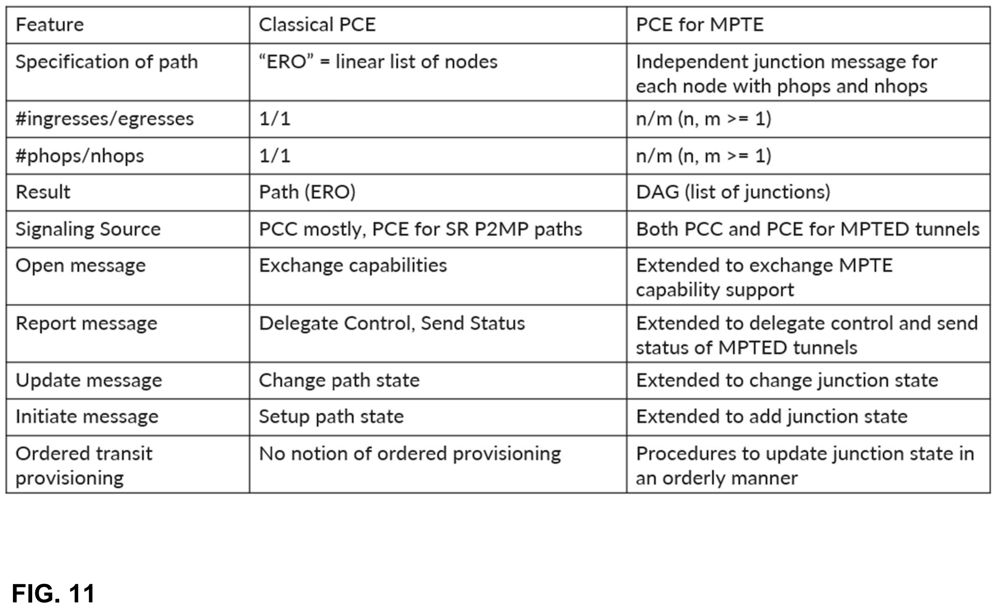

PCEP for MPTE differs from conventional ("classical") PCEP in a number of ways. These are shown in FIG. 11. In accordance with techniques of this disclosure, network systems can use PCEP and RSVP together to compute and signal MPTE tunnels for computed MPTEDs.

In some examples, a data model may be used with a protocol to provision and manage MPTE tunnels. The data model may be a YANG data model. In general, the data model can be used to:
- Provision MPTE tunnel at the Tunnel Originator
- Retrieve MPTE tunnel state from the Tunnel Originator
- Provision Junctions
- Retrieve Junction State from each Junction Node.

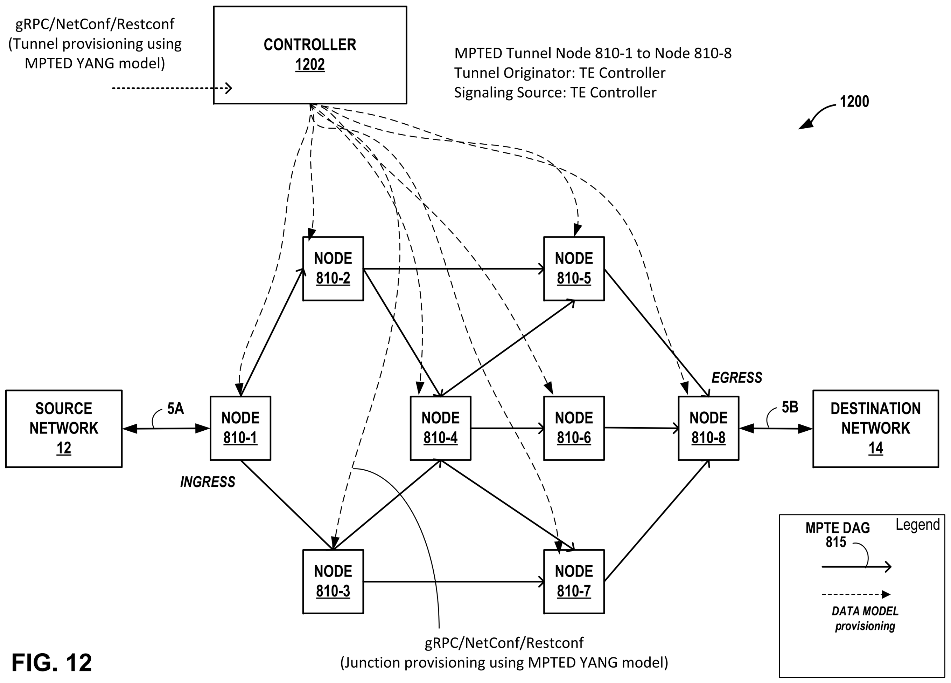

FIG. 12 is a block diagram illustrating an example network system in which junction provisioning is performed using an MPTED data model, in accordance with one or more aspects of this disclosure. Network system 1200 is similar to other network systems described herein, but includes controller 1202. Controller 1202 may be a PCE such as PCE 802, a network controller, a WAN controller, an SDN controller, or a TE controller. The MPTE tunnel for MPTE DAG 815 is originated by controller 1202 and provisioned based on the MPTED YANG data model via gRPC, NETCONF, or RESTCONF. Controller 1202 computes MPTE DAG 815, and produces a list of junctions that need to be provisioned to establish the MPTE tunnel. Controller 1202 constructs provisioning requests for each of the junction nodes 810 based on the MPTED YANG data model and programs each of nodes 810 using gRPC, NETCONF, or RESTCONF. The provisioning request may also subscribe controller 1202 to each of nodes 810 to receive Junction Notifications as well as Resource Notifications. The MPTE tunnel setup is deemed complete on the controller 1202 when junction notifications are received from each junction node 810 indicating successful provisioning of junction state.

The data model may include:
List of MPTE tunnels
   - For use on the MPTE tunnel Originator
   - Each entry includes a list of the junctions that make up the DAG. Each junction entry carries the intended and actual state of the junction
List of Junctions
   - For use on a junction node
   - Each junction entry carries the intended and actual state of the junction

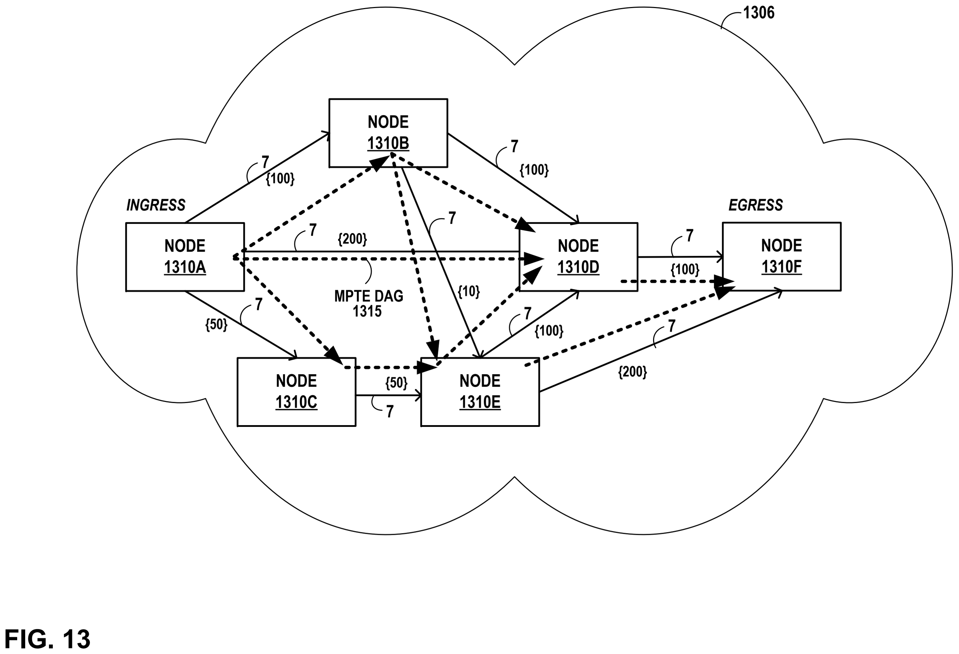

FIG. 13 is a block diagram illustrating nodes 1310A-1310F (collectively, "nodes 1310") of network 1306 and MPTED 15, in accordance with one or more aspects of this disclosure. Network 1306 is similar to network 6 of FIG. 1, and nodes 1310 are similar to nodes 10 of FIG. 1. A path computation system may perform MPTE as described with respect to network 6 of FIG. 1 to compute and provision paths in network 1306 for a traffic trunk. For example, the path computation system may use topology data of network 1306 of nodes 1310 to compute, using a shortest-path algorithm and in some cases based on operator-specific constraints, a Directed Acyclic Graph (DAG) from ingress node 1310A to egress node 1310F. The set of paths along links interconnecting the nodes from the one or more ingress nodes to the one or more egress nodes, as represented by the DAG, is referred to as an MPTED and is illustrated in FIG. 13 as MPTED 1315.

The set of shortest paths for MPTED 1315, as computed by the path computation system, are:
- {1310A, 1310B, 1310D, 1310F} - metric 300
- {1310A, 1310D, 1310F} - metric 300
- {1310A, 1310B, 1310E, 1310F} - metric 310
- {1310A, 1310C, 1310E, 1310F} - metric 300
- {1310A, 1310C, 1310E, 1310D, 1310F} - metric 300
- {1310A, 1310B, 1310E, 1310D, 1310F} - metric 310

The path computation system computed MPTED 1315 using a shortest-path algorithm with slack, for shortest paths including the {1310B, 1310E} link are metric 10 longer than other paths.

FIG. 14A is a block diagram illustrating nodes 1310 of network 1306 of FIG. 13 and MPTED 1315, in accordance with one or more aspects of this disclosure. Each of the communication links 7 included in MPTED 1315 is shown with a value denoting an available bandwidth on the link. For example, link {1310A, 1310B} has an available bandwidth of 10 Gbps and link {1310E, 1310D} has an available bandwidth of 8 Gbps.

The path computation system applies a max flow algorithm, in this case Ford-Fulkerson, to MPTED 1315 with the available bandwidths to compute result data that includes the flow value on each link. The flow values may correspond to the respective bandwidths to be used the links, which may for each link be the bandwidth on that link needed to achieve maximum flow for MPTED 1315. The flow value may be the flow value computed by the max flow algorithm needed to achieve maximum flow for MPTED 1315.

The result of one application of the max flow algorithm is shown in FIG. 14B. The maximum flow or aggregate bandwidth for MPTED 1315 is 18 Gbps. Each link has a corresponding {flow value / available bandwidth} as shown. For example, link {1310A, 1310B} has a flow value of 10 Gbps out of its available 10 Gbps {10/10} and link {1310E, 1310D} has an available bandwidth of 0 Gbps out its available 8 Gbps {0/8}. In some examples, if the aggregate bandwidth exceeds a required bandwidth for an MPTED, the path computation system may scale down the flow values on each link needed by a scaling factor based a relationship between the aggregate bandwidth and the required bandwidth.

Path computation system determines, for each of junction nodes 1310 in MPTED 1315, respective shares of the incoming bandwidth for MPTED 15 to the node that the node is to send on the one or more outgoing links of the node. In the example of FIG. 14B, node 1310A for instance has outgoing links to {1310B, 1310D, 1310C} with flow values {10, 7, 1}, respectively. 10/7/1 is the ratio indicating shares of the incoming network traffic's bandwidth for MPTED 1315 to node 1310A, that node 1310A is to send on those outgoing links {1310B, 1310D, 1310C}. In other words, 10/18 share on the outgoing link to node 1310B, 7/18 share on the outgoing link to node 1310B, and 1/18 share on the outgoing link to node 1310E.

Node 1310E, for instance, has two outgoing links (to nodes 1310D and 1310F). Thus, incoming bandwidth for MPTED 1315 to node 1310E is forwarded on those two outgoing links. Node 1310E has two incoming links, from Node 1310C and from Node 1310B. As can be seen, the aggregate incoming bandwidth (6 Gbps) from these links is equal to the outgoing bandwidth (6 Gbps) on the outgoing links to node 1310D and node 1310F. In the application of the max flow algorithm with results shown in FIG. 14B, 0/6 is the ratio indicating shares of the incoming bandwidth for MPTED 1315 to node 1310E that node 1310E is to send on those outgoing links {1310D, 1310F}. In other words, 0/6 share on the outgoing link to node 1310D, 6/6 share on the outgoing link to node 1310F (all traffic node 1310E receives for MPTE DAG 1315 is sent to node 1310F).

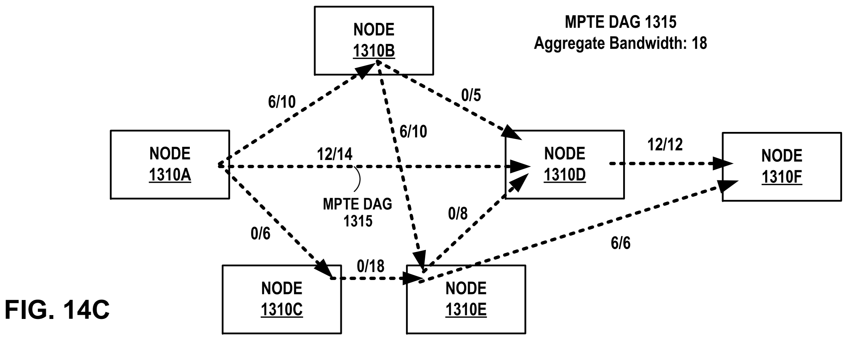

The result of another application of the max flow algorithm is shown in FIG. 14C. The maximum flow or aggregate bandwidth for MPTED 1315 is 18 Gbps. However, in this application of the max flow algorithm with results shown in FIG. 14C, the algorithm prioritizes the paths through node 1310C until its capacity or available downstream routes are exhausted. In the application of the max flow algorithm with results shown in FIG. 14B, by contrast, the algorithm prioritizes the paths through node 1310B until its capacity or available downstream routes are exhausted. This results in the same maximum flow / aggregate bandwidth but a different set of shares per node.

For each junction node of junction nodes 1310, path computation system generates junction data that indicates the outgoing links (next hops or 'nhops') of the junction node for MPTED 1315 and indicates the corresponding share of incoming bandwidth for MPTED 1315 that the junction node is to forward on each of the outgoing links of the junction node for MPTED 1315. Path computation system sends generated, corresponding junction data to each of junction nodes 1310, which generate and install forwarding state as described with respect to FIG 1, and forward network traffic of the traffic trunk accordingly to implement MPTED 1315.

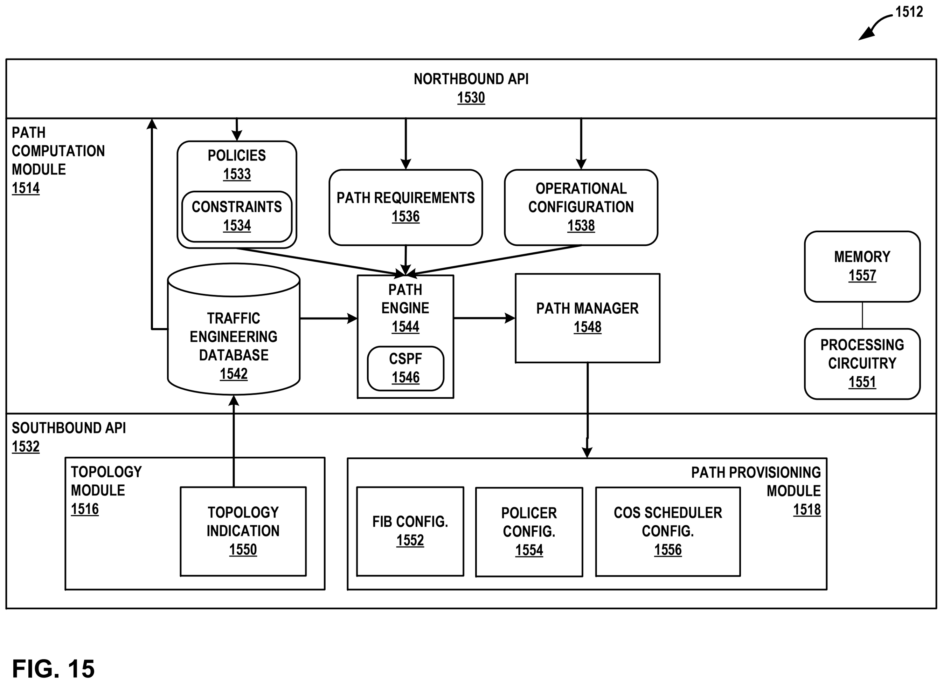

FIG. 15 is a block diagram illustrating an example controller, in accordance with one or more aspects of this disclosure. Controller 1512 may represent an example implementation of a path computation system. Controller 1512 may be or implement a path computation element (PCE) such as PCE 802, a network controller, WAN controller, software-defined networking (SDN) controller, a network optimization and planning tool, an SD-WAN edge device, an SD-WAN controller, an example of controller 1202, and/or other system for computing paths in a network.

In general, path computation module 1514 and path provisioning module 1518 of controller 1512 may use the protocols communicate with nodes in a network to obtain topology data for computing an MPTED and junction data and provide the appropriate junction data to each of the nodes to implement the MPTED. Southbound API 1532 allows controller 1512 to communicate with network nodes, e.g., routers and switches of the network using, for example, ISIS, OSPFv2, BGP-LS, RSVP-TE, and PCEP protocols. By providing a view of the global network state and bandwidth demand in the network, controller 1512 is able to compute an MPTED using available bandwidths.

In some examples, application services issue path requests to controller 1512 to request paths in a path computation domain controlled by controller 1512. For example, a path request includes a required bandwidth or other constraint and two endpoints representing an ingress node and an egress node that communicate over the path computation domain managed by controller 1512. Path requests may further specify time/date during which paths must be operational and CoS parameters (for instance, bandwidth required per class for certain paths).

Controller 1512 accepts path requests from application services to establish paths between the endpoints over the path computation domain. Paths may be requested for different times and dates and with disparate bandwidth requirements. Controller 1512 reconciling path requests from application services to multiplex requested paths onto the path computation domain based on requested path parameters and anticipated network resource availability.

To intelligently compute and establish paths through the path computation domain, controller 1512 includes topology module 1516 to maintain topology information (e.g., a traffic engineering database) describing available resources of the path computation domain, including network nodes, interfaces thereof, and interconnecting communication links.

Path computation module 1514 of controller 1512 computes requested paths through the path computation domain in accordance with MPTE techniques described herein. Upon computing an MPTE and outgoing interface shares for junction nodes, path computation module 1514 may initiate or schedule provisioning of the junction nodes with junction data by path provisioning module 1518 to implement the shares.

In this example, controller 1512 includes northbound and southbound interfaces in the form of northbound application programming interface (API) 1530 and southbound API 1532. Northbound API 1530 includes methods and/or accessible data structures by which, as noted above, application services may configure and request path computation and query established paths within the path computation domain. Southbound API 1532 includes methods and/or accessible data structures by which controller 1512 receives topology information for the path computation domain and establishes paths by accessing and programming data planes of network nodes within the path computation domain.

Path computation module 1514 includes data structures to store path information for computing and establishing requested paths. These data structures include policies 1533 having policy constraints 1534, path requirements 1536, operational configuration 1538, and path export 1540. Applications may invoke northbound API 1530 to install/query data from these data structures. Policy constraints 1534 includes data that describes constraints upon path computation.

Using northbound API 1530, a network operator may configure policies 1533. Any of policies 1533 may specify one or more policy constraints 1534 that limit the acceptable paths for an MPTED to those that satisfy the policy constraints. Policies 1533 may specify a bandwidth constraint, a color, an SRLG, etc., for a given one of policies 1533. Path engine 1544 computes one or more paths to collectively satisfy any constraints 1534 for the MPTED.

Applications may modify attributes of a link to effect resulting traffic engineering computations. In such instances, link attributes may override attributes received from topology indication module 1550 and remain in effect for the duration of the node / attendant port in the topology. The link edit message may be sent by the controller 1512.

Operational configuration 1538 represents a data structure that provides configuration information to controller 1512 to configure the path computation algorithm with respect to, for example, class of service (CoS) descriptors and detour behaviors. Operational configuration 1538 may receive operational configuration information in accordance with CCP. An operational configuration message specifies CoS value, queue depth, queue depth priority, scheduling discipline, over provisioning factors, detour type, path failure mode, and detour path failure mode, for instance. A single CoS profile may be used for the entire path computation domain. The Service Class assigned to a Class of Service may be independent of the node as an attribute of the path computation domain.

Path requirements 1536 represent an interface that receives path requests for paths to be computed by path computation module 1514 and provides these path requests (including path requirements) to path engine 1544 for computation. Path requirements 1536 may be received or may be handled by the controller. In such instances, a path requirement message may include a path descriptor having an ingress node identifier and egress node identifier for the nodes terminating the specified path, along with request parameters including CoS value and bandwidth. A path requirement message may add to or delete from existing path requirements for the specified path.

Topology module 1516 includes topology indication module 1550 to handle topology discovery and, where needed, to maintain control channels between controller 1512 and nodes of the path computation domain. Topology indication module 1550 may include an interface to describe received topologies to path computation module 1514.

Topology indication module 1550 may use a topology discovery protocol to describe the path computation domain topology to path computation module 1514. In one example, using a cloud control protocol mechanism for topology discovery, topology indication module 1550 may receive a list of node neighbors, with each neighbor including a node identifier, local port index, and remote port index, as well as a list of link attributes each specifying a port index, bandwidth, expected time to transmit, shared link group, and fate shared group, for instance.

Topology indication module 1550 may communicate with a topology server, such as a routing protocol route reflector, to receive topology information for a network layer of the network. Topology indication module 1550 may include a routing protocol process that executes a routing protocol to receive routing protocol advertisements, such as Open Shortest Path First (OSPF) or Intermediate System-to-Intermediate System (IS-IS) link state advertisements (LSAs) or Border Gateway Protocol (BGP) UPDATE messages. Topology indication module 1550 may in some instances be a passive listener that neither forwards nor originates routing protocol advertisements. In some instances, topology indication module 1550 may alternatively, or additionally, execute a topology discovery mechanism such as an interface for an Application-Layer Traffic Optimization (ALTO) service. Topology indication module 1550 may therefore receive a digest of topology information collected by a topology server, e.g., an ALTO server, rather than executing a routing protocol to receive routing protocol advertisements directly.

In some examples, topology indication module 1550 receives topology information that includes traffic engineering (TE) information. Topology indication module 1550 may, for example, execute Intermediate System-to-Intermediate System with TE extensions (IS-IS-TE) or Open Shortest Path First with TE extensions (OSPF-TE) to receive TE information for advertised links. Such TE information includes one or more of the link state, administrative attributes, and metrics such as bandwidth available for use at various LSP priority levels of links connecting routers of the path computation domain. In some instances, topology indication module 1550 executes BGP-TE to receive advertised TE information for inter-autonomous system and other out-of-network links.

Traffic engineering database (TED) 1542 stores topology information, received by topology indication module 1550, for a network that constitutes a path computation domain for controller 1512 to a computer-readable storage medium (not shown). TED 1542 may include one or more link-state databases (LSDBs), where link and node data is received in routing protocol advertisements, received from a topology server, and/or discovered by link-layer entities such as an overlay controller and then provided to topology indication module 1550. In some instances, an operator may configure traffic engineering or other topology information within MT TED 1542 via a client interface. Link and node data may include data indicating available bandwidths on links (or corresponding interfaces).

Path engine 1544 accepts the current topology snapshot of the path computation domain in the form of TED 1542 and computes, using TED 1542, an MPTE DAG between nodes in accordance with policies 1533.

In general, to compute an MPTE DAG, path engine 1544 may determine based on TED 1542 and all specified constraints whether there exists a path in the layer that satisfies the specifications for a requested MPTE path. Path engine 1544 may use the Dijkstra constrained SPF (CSPF) 1546 or other path computation algorithms for identifying satisfactory paths though the path computation domain. If there are no constraints, path engine 1544 may revert to SPF. If a satisfactory MPTE DAG for the a requested MPTE path exists, path engine 1544 provides a descriptor for the computed MPTE DAG to path manager 1548 to compute the shares and provision the junction data to nodes on the MPTE DAG using path provisioning module 1518. An MPTE DAG computed by path engine 1544 may be referred to as a "computed" MPTE DAG.

Path manager 1548 establishes computed MPTE DAGs with computed shares using path provisioning module 1518, which in this instance includes forwarding information base (FIB) configuration module 1552 (illustrated as "FIB CONFIG. 1552"), policer configuration module 1554 (illustrated as "POLICER CONFIG. 1554"), and CoS scheduler configuration module 1556 (illustrated as "COS SCHEDULER CONFIG. 1556").

FIB configuration module 1552 programs forwarding information to data planes of network nodes of the path computation domain, which may be used to implement a computed MPTE DAG. The forwarding information may include or implement junction data. The FIB of a network node may include the MPLS switching table, the CoS scheduler per-interface and policers at ingress. FIB configuration module 1552 may implement, for instance, a software-defined networking (SDN) protocol such as the OpenFlow protocol or the I2RS protocol to provide and direct the nodes to install forwarding information to their respective data planes. Accordingly, the "FIB" may refer to forwarding tables in the form of, for instance, one or more OpenFlow flow tables each comprising one or more flow table entries that specify handling of matching packets. FIB configuration module 1552 may in addition, or alternatively, implement other interface types, such as a Simple Network Management Protocol (SNMP) interface, path computation element protocol (PCEP) interface, a Device Management Interface (DMI), a CLI, Interface to the Routing System (I2RS), or any other node configuration interface.

FIB configuration module 1552 may add, change (i.e., implicit add), or delete forwarding table entries in accordance with information received from path computation module 1514. A FIB configuration message from path computation module 1514 to FIB configuration module 1552 may specify an event type (add or delete); a node identifier; a path identifier; one or more forwarding table entries each including an ingress port index, ingress label, egress port index, and/or egress label.

Policer configuration module 5154 may be invoked by path computation module 1514 to request a policer be installed on a particular network node for a particular outgoing interface to implement the share of outgoing traffic from that node for implementing the MPTE DAG. Policer configuration module 5154 may receive policer configuration requests. A policer configuration request message may specify an event type (add, change, or delete); a node identifier; an LSP identifier; and, for each class of service, a list of policer information including CoS value, maximum bandwidth, burst, and drop/remark. FIB configuration module 1552 configures the policers in accordance with the policer configuration requests.

CoS scheduler configuration module 556 may be invoked by path computation module 1514 to request configuration of CoS scheduler on the network nodes. CoS scheduler configuration module 556 may receive the CoS scheduler configuration information. A scheduling configuration request message may specify an event type (change); a node identifier; a port identity value (port index); and configuration information specifying bandwidth, queue depth, and scheduling discipline, for instance.

Topology indication module 1550 may receive an indication that a network topology for a network managed by controller 1512 has changed to a modified network topology. The indication may be, for example, an update to a link status indicating the link is down (or up), has different bandwidth availability or bandwidth status, has a different metric, or color, has a different Shared Risk Link Group, or other change to a link status. The indication may be, for example, an indication of a failed network node that affects the link statuses of multiple different links. Topology module 1516 may update traffic engineering database 1542 with a modified topology that is modified based on the indication received by topology indication module 1550.

Controller 1512 includes a hardware environment including processing circuitry 1551 for executing machine-readable software instructions, stored by memory 1557, for implementing modules, interfaces, managers, and other components illustrated and described with respect to controller 1512. The components may be implemented in software, or hardware, or may be implemented as a combination of software, hardware, or firmware. For example, controller 1512 may include one or more processors comprising processing circuitry 1551 that execute program code in the form of software instructions. In that case, the various software components/modules of may comprise executable instructions stored on memory 1557 comprising a computer-readable storage medium, such as computer memory or hard disk.

FIG. 16 is a block diagram illustrating an example message format for providing junction data to a junction node, in accordance with one or more aspects of this disclosure. Message 1600 may be an example of a message sent by a path computation system to any junction node described herein to provide junction data. In some examples, message 1600 is a JUNCTION message.

MPTED computer (MC) ID field 1602 identifies the entity computing the MPTED. This may be an ingress node of the MPTED or a path computation element, for examples.

MPTED ID (MID) field 1604 identifies the MPTED that is the subject of message 1600 (hereinafter for FIG. 16 description, "the MPTED").

MPTED Version field 1606 identifies a version of the MPTED. As the full MPTED ID (the FID) may consist of <MC, MID, version>, fields 1602, 1604, and 1606 together identify a particular version of an MPTED.

Tunnel Type field 1608 identifies a type of tunnel used to implement the MPTED. Tunnel Information field 1609 includes information for implementing the tunnel to use for the MPTED. For example, for an MPLS tunnel with a statically assigned label, Tunnel Information field 1609 may include the label. For IP-based tunnels, Tunnel Information field 1609 may include the source and destination IP addresses.

Ingresses field 1610 indicates a number of ingresses of the MPTED. Egresses field 1612 indicates a number of egresses of the MPTED. Fields 1610 and 1612 are used to indicate the respective numbers of ingress identifiers fields 1614 and egress identifiers fields 1616 in message 1600. Fields 1610, 1612, 1614, and 1616 are optional.

Number of phops field 1618 indicates a number of phops for the junction node that is the recipient of message 1600. Number of nhops field 1620 indicates a number of nhops for the junction node that is the recipient of message 1600. Fields 1618 and 1620 are used to indicate the respective numbers of phop structures 1622A-1622P (collectively, "phop structures 1622") and nhop structures 1624A-1624Q (collectively, "nhop structures 1624") in message 1600.

Junction bandwidth field 1621 indicates an amount of bandwidth for the MPTED for the junction node that is the recipient of message 1600. The value may, e.g., specify a number of Mbps or other quantity or measurement of bandwidth.

Phop structure 1622A indicates a phop of the junction node that is the recipient of message 1600. Phop structure 1622A, for instance, includes previous hop (phop) node 1 ID and phop oif 1. Phop node 1 ID may be a loopback or other address of another junction node. An outgoing interface (oif) may be a unique number assigned by a node for each outgoing link the node has. In some examples, an outgoing interface may be identified using an address of a junction node, or by some other identifier. Phop oif 1 is an oif of the junction node identified by phop node 1 ID. The junction node that is the recipient of message 1600 may use phop structure 1622A to generate and signal a label (e.g., an MPLS label) to the junction node identified by phop node 1 ID.

Nhop structure 1624A indicates a nhop of the junction node that is the recipient of message 1600. Nhop structure 1624A, for instance, includes nhop oif 1 and nhop share 1. Nhop oif 1 identifies an oif of the junction node that is the recipient of message 1600. Nhop share 1 indicates a share of the junction bandwidth indicated in junction bandwidth field 1621 that the junction node is to send on nhop oif 1. A junction node should load balance incoming bandwidth on the MPTED to nhop oif n according to a ratio of (share n)/(sum (shares 1 to Q)). Shares may be specified in nhop structures 1624 using a share, an absolute bandwidth, a ratio, or other specification.

FIG. 17 is a block diagram illustrating an example message format for providing a label, in accordance with one or more aspects of this disclosure. Message 1700 may be an example of a message by which a junction node may provide a label to a phop. In some examples, message 1700 is a LABEL message. Message 1700 may be used for MPTEDs having tunnel type SigLab. A junction node may send a different instance of message 1700 for each of its phops. Multiple phops for the junction node may be on a junction node with multiple outgoing interfaces to the junction node. Similarly, a junction node may have multiple outgoing interfaces and thus multiple nhops to another junction node.

MC ID field 1702, MPTED ID field 1704, and MPTED Version field 1706 are similar to MC ID field 1602, MPTED ID field 1604, and MPTED Version field 1606, respectively, as described above with respect to message 1600 of FIG. 16.

Phop node ID field 1708 and phop oif field 1710 identifies a phop of the junction node that sends message 1700. Phop node ID field 1708 may specify a loopback or other address of another junction node.

Label field 1712 includes a switching label, such as a Multiprotocol Label Switching (MPLS) label. The receiving junction node attaches the switching label to packets for the MPTED identified in message 1700. The switching label identifies to the junction node sending message 1700 that the packets belong to the MPTE tunnel (and thus the MPTE).

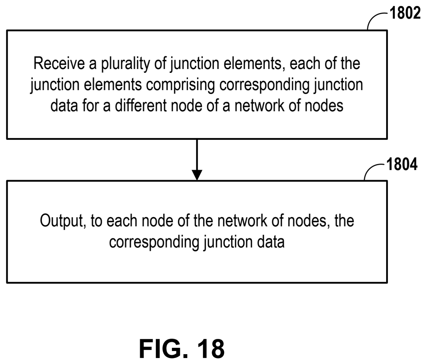

FIG. 18 is a flowchart illustrating an example mode of operation for a signaling source, in accordance with one or more aspects of this disclosure. In an example, node 810-1, as the signaling source, receives a plurality of junction elements, each of the junction elements comprising corresponding junction data for a different node (e.g., 810-2 to 810-7 and optionally 810-8 as the egress node) of a network of nodes (1802). Node 810-1 outputs, to each node of the network of nodes, the corresponding junction data for that node.

Therefore, from one perspective, there have been described techniques for multipath traffic engineering (MPTE). In an example, computer-readable storage media comprises instructions for causing one or more processors of a network node to: obtain data associating a first incoming link, a second incoming link, a share of outgoing bandwidth for a first outgoing link, and a share of outgoing bandwidth for a second outgoing link; and forward, based on the data, incoming network traffic received at the network node on the first incoming link and incoming network traffic received at the network node on the second incoming link via the first outgoing link according to the share of outgoing bandwidth for the first outgoing link and via the second outgoing link according to the share of outgoing bandwidth for the second outgoing link.

In this way, the techniques may enable the following examples.

Example 1. A system comprising: computer-readable storage media storing instructions; and processing circuitry having access to the computer-readable storage media and configured to execute the instructions to: compute, for a network of nodes interconnected by one or more links, a directed acyclic graph, wherein edges of the directed acyclic graph correspond to links of the one or more links that make up paths from an ingress node of the nodes to an egress node of the nodes; apply, based at least on respective available bandwidths of a first link and a second link of the links corresponding to the edges of the directed acyclic graph, a max flow algorithm to the directed acyclic graph to determine a share of outgoing bandwidth for the first link and a share of outgoing bandwidth for the second link; and output data indicating the share for the first link and the share for the second link, wherein the data causes a particular node to forward network traffic received at the particular node according to the share of outgoing bandwidth for the first link and the share of outgoing bandwidth for the second link.

Example 2. The system of example 1, wherein the data indicating the share of outgoing bandwidth for the first link and the share of outgoing bandwidth for the second link comprises data indicating a ratio of the first link to the second link.

Example 3. The system of example 1, wherein the network traffic received at the particular node is for a traffic trunk transported by a multipath traffic engineering directed acyclic graph based on the directed acyclic graph.

Example 4. The system of any of examples 1-2, wherein the processing circuitry is configured to execute the instructions to output the data via a Transmission Control Protocol session.

Example 5. The system of any of examples 1-4, wherein the particular node is a first particular node, and wherein the processing circuitry is configured to execute the instructions to: apply the max flow algorithm to the directed acyclic graph to determine a share of outgoing bandwidth for a third link of the links corresponding to edges of the directed acyclic graph; and output, to a second particular node of the nodes, data indicating the share of outgoing bandwidth for the third link to cause the second particular node to forward network traffic received at the second particular node according to the share of outgoing bandwidth for the third link.

Example 6. The system of example 5, wherein the processing circuitry is configured to execute the instructions to: output the data indicating the respective shares for the first link and the second link to the first particular node via a first Transmission Control Protocol session; and output the data indicating the share for the third link to the second particular node via a second Transmission Control Protocol session.

Example 7. The system of any of examples 1-6, wherein the data further indicates a bandwidth of the network traffic to be received by the particular node and that is to be forwarded via the first link and the second link according to the share of outgoing bandwidth for the first link and the share of outgoing bandwidth for the second link.

Example 8. The system of any of examples 1-7, wherein the data further identifies a multipath traffic engineering directed acyclic graph.

Example 9. The system of any of examples 1-8, wherein the processing circuitry is configured to execute the instructions to output the data in a message for a multipath traffic engineering directed acyclic graph (MPTED) based on the directed acyclic graph.

Example 10. The system of example 9, wherein the message comprises a JUNCTION message to the particular node.

Example 11. The system of example 9, wherein the message indicates, for the particular node: one or more previous hop nodes in the MPTED and at least one outgoing interface for each of the one or more previous hop nodes; and one or more next hop outgoing interfaces and, for each of the one or more next hop outgoing interfaces, an indication of the corresponding share of outgoing bandwidth.

Example 12. The system of example 11, wherein the message causes the particular node to send a message with a label to each of the one or more previous hop nodes in the MPTED.

Example 13. The system of example 12, wherein the message with a label comprises a LABEL message.

Example 14. The system of example 1, wherein the directed acyclic graph is for a multipath traffic engineering directed acyclic graph.

Example 15. The system of any of examples 1-14, wherein the respective available bandwidths of the first link and the second link comprise one of a maximum link bandwidth, residual bandwidth, or available bandwidth.

Example 16. The system of any of examples 1-15, wherein each of the first link and the second link is an outgoing link of the particular node.

Example 17. The system of any of examples 1-15, wherein the processing circuitry is configured to execute the instructions to: compute the directed acyclic graph using a constrained shortest path first algorithm using a slack.

Example 18. The system of any of examples 1-17, wherein the egress node of the nodes comprises a first egress node and a different, second egress node.

Example 19. The system of any of examples 1-18, wherein the ingress node of the nodes comprises a first ingress node and a different, second ingress node.

Example 20. The system of any of examples 1-8, wherein the processing circuitry is configured to execute the instructions to output the data to the particular node.

Example 21. The system of any of examples 1-20, wherein the system comprises a path computation element (PCE) configured to compute the directed acyclic graph.

Example 22. The system of example 1, wherein the processing circuitry is configured to execute the instructions to: output the data in a direct message to the particular node.

Example 23. The system of example 22, wherein the direct message indicates, for the particular node: one or more previous hop nodes and at least one outgoing interface for each of the one or more previous hop nodes; and one or more next hop outgoing interfaces and, for each of the one or more next hop outgoing interfaces, an indication of the corresponding share of outgoing bandwidth.

Example 24. The system of example 22, wherein the direct message comprises a Resource Reservation Protocol (RSVP) Path message that includes the data.

Example 25. The system of example 24, wherein the RSVP Path message causes the particular node to output, to one of the previous hop nodes, an RSVP Resv message that includes a label for incoming bandwidth for the particular node.

Example 26. The system of example 22, where the direct message includes the data according to a data model.

Example 27. The system of example 22, wherein the direct message comprises a Path Computation Element Communication Protocol (PCEP) message.

Example 28. The system of any of examples 1-27, wherein to apply the max flow algorithm to the directed acyclic graph the processing circuitry is configured to execute the instructions to apply, based at least on respective available bandwidths of links corresponding to the edges of the directed acyclic graph, the max flow algorithm to the directed acyclic graph.

Example 1A. A node of a network, the node comprising: computer-readable storage media storing instructions; and processing circuitry having access to the computer-readable storage media and configured to execute the instructions to: obtain data indicating or associating a share of outgoing bandwidth for a first outgoing link, a share of outgoing bandwidth for a second outgoing link, a first incoming link, and a second incoming link; and forward incoming bandwidth received on the first incoming link and the second incoming link via the first outgoing link according to the share of outgoing bandwidth for the first outgoing link and via the second outgoing link according to the share of outgoing bandwidth for the second outgoing link.

Example 2A. The node of example 1A, wherein the data indicates the share of outgoing bandwidth for the first outgoing link and the share of outgoing bandwidth for the second outgoing link using a ratio.

Example 3A. The node of any of examples 1A-2A, wherein the data indicates an identifier for a multipath traffic engineering directed acyclic graph (MPTED), and wherein the processing circuitry is configured to execute the instructions to forward, based on a determination the incoming traffic is associated with the MPTED, the incoming traffic received on the first incoming link and the second incoming link via the first outgoing link according to the share of outgoing bandwidth for the first outgoing link and via the second outgoing link according to the share of outgoing bandwidth for the second outgoing link.

Example 4A. The node of example 3A, wherein the determination the incoming traffic is associated with the MPTED comprises a determination that tunnel information of the incoming traffic is associated with the MPTED.

Example 5A. The node of any of examples 1A-4A, wherein the processing circuitry is configured to execute the instructions to receive the data in a message for a multipath traffic engineering directed acyclic graph (MPTED).

Example 6A. The node of example 5A, wherein the message indicates, for the node: one or more previous hop nodes in the MPTED and at least one outgoing interface for each of the one or more previous hop nodes to indicate the first incoming link and the second incoming link; and one or more next hop outgoing interfaces and, for each of the one or more next hop outgoing interfaces, an indication of the corresponding share of outgoing bandwidth.

Example 7A. The node of any of examples 5A-6A, wherein the processing circuitry is configured to execute the instructions to: based on the message, send a corresponding message that includes a label to each of the one or more previous hop nodes in the MPTED and that also includes tunnel information that identifies the MPTED; and forward, based on a determination the incoming traffic includes the tunnel information that identifies the MPTED, the incoming traffic received on the first incoming link and the second incoming link via the first outgoing link according to the share of outgoing bandwidth for the first outgoing link and via the second outgoing link according to the share of outgoing bandwidth for the second outgoing link.

Example 8A. The node of any of examples 1A-4A, wherein the processing circuitry is configured to execute the instructions to receive the data in a JUNCTION message.

Example 1B. A system comprising: computer-readable storage media storing instructions; and processing circuitry having access to the computer-readable storage media and configured to execute the instructions to: configure, with data, a node to forward incoming bandwidth received on a first incoming link or a second incoming link via a first outgoing link of the node according to a share of outgoing bandwidth for the first outgoing link and via a second outgoing link according to a share of outgoing bandwidth for the second outgoing link.

Example 2B. The system of example 1B, wherein the processing circuitry is configured to execute the instructions to: send the data to the node in a message.

Example 3B. The system of example 2B, wherein the message is a JUNCTION message.

Example 1C. A computer-readable storage medium comprising instructions for causing one or more processors to: compute, for a network of nodes interconnected by one or more links, a directed acyclic graph, wherein edges of the directed acyclic graph correspond to links of the one or more links that make up paths from an ingress node of the nodes to an egress node of the nodes; apply a max flow algorithm to the directed acyclic graph to determine a share of outgoing bandwidth for the first link and a share of outgoing bandwidth for the second link; and output data indicating the share of outgoing bandwidth for the first link and the share of outgoing bandwidth for the second link to cause the particular node to forward network traffic according to the share of outgoing bandwidth for the first link and the share of outgoing bandwidth for the second link.

Example 2C. The computer-readable storage medium of example 1C, further comprising instructions for causing the one or more processors to perform the steps of any of examples 2-27.

Example 1D. A computer-readable storage medium comprising instructions for causing one or more processors to: obtain data indicating or associating a share of outgoing bandwidth for a first outgoing link, a share of outgoing bandwidth for a second outgoing link, a first incoming link, and a second incoming link; and forward incoming traffic received on the first incoming link and the second incoming link via the first outgoing link according to the share of outgoing bandwidth for the first outgoing link and via the second outgoing link according to the share of outgoing bandwidth for the second outgoing link.

Example 2D. The computer-readable storage medium of example 1D, further comprising instructions for causing the one or more processors to perform the steps of any of examples 2A-8A.

Example 1E. A computer-readable storage medium comprising instructions for causing one or more processors to: configure, with data, a node to forward incoming traffic received on a first incoming link or a second incoming link via a first outgoing link of the node according to a share of outgoing bandwidth for the first outgoing link and via a second outgoing link according to a share of outgoing bandwidth for the second outgoing link.

Example 1F. Any method or methods described in this disclosure, performed by a system, or caused to be performed by one or more processors executing instructions.

Example 1G. A network of nodes interconnected by one or more links, the network of nodes comprising: a first node configured with first data, the first data based on a multipath traffic engineering directed acyclic graph (MPTED), wherein the first data causes the first node to load balance incoming traffic received at the first node across a plurality of next hops for the first node; and a second node configured with second data, the second data based on the MPTED, wherein the second data causes the second node to load balance incoming traffic received at the second node across a plurality of next hops for the second node.

Example 2G. The network of nodes of example 1G, wherein: the first data specifies respective shares of the incoming traffic received at the first node for the plurality of next hops for the first node; and the second data specifies respective shares of the incoming traffic received at the second node for the plurality of next hops for the second node.

Example 3G. The network of nodes of example 1G, wherein: the first node is a non-ingress node for the MPTED, and the second node is a non-ingress node for the MPTED.

Example 1H. A system comprising: computer-readable storage media storing instructions; and processing circuitry having access to the computer-readable storage media and configured to execute the instructions to: receive a plurality of junction elements, each of the junction elements comprising corresponding junction data for a different node of a network of nodes; and output, to each node of the network of nodes, the corresponding junction data.

Example 2H. The system of example 1H, wherein the corresponding junction data for a node comprises: respective shares of outgoing bandwidth for one or more next hops of the node.

Example 3H. The system of example 2H, wherein the corresponding junction data for the node causes the node to forward incoming bandwidth to the node according the respective shares of outgoing bandwidth for the one or more next hops of the node.

Example 4H. The system of example 1H, wherein to output the corresponding junction data, the processing circuitry is configured to output a JUNCTION message comprising the corresponding junction data.

Example 5H. The system of example 1H, wherein the processing circuitry is configured to receive the plurality of junction elements in a Path Computation Element Communication Protocol (PCEP) message or in a protocol message including the plurality of junction elements according to a data model.

Example 6H. The system of example 1H, wherein the processing circuitry is configured to execute the instructions to: delegate computation of a multipath traffic engineering directed acyclic graph (MPTED) to a path computation element (PCE).

Example 7H. The system of example 1H, wherein to output the corresponding junction data, the processing circuitry is configured to output a Resource Reservation Protocol (RSVP) Path message that includes the corresponding junction data directly to the node.

Example 8H. The system of example 1H, wherein the junction data is based on a multipath traffic engineering directed acyclic graph.

Example 11. A system comprising: computer-readable storage media storing instructions; and processing circuitry having access to the computer-readable storage media and configured to execute the instructions to: compute, for a network of nodes interconnected by one or more links, a directed acyclic graph, wherein edges of the directed acyclic graph correspond to links of the one or more links that make up paths from an ingress node of the nodes to an egress node of the nodes; apply, based at least on respective available bandwidths of links corresponding to the edges of the directed acyclic graph, a max flow algorithm to the directed acyclic graph to determine, for each node of one or more non-egress nodes of the network of nodes, respective shares of outgoing bandwidth for one or more outgoing interfaces of the node; and output, to each node of the one or more non-egress nodes, corresponding data that indicates the respective shares of outgoing bandwidth for one or more outgoing interfaces of the node.

Example 2I. The system of example 11, wherein the processing circuitry is configured to execute the instructions to: receive a delegation of computation of a multipath traffic engineering directed acyclic graph (MPTED); and compute the directed acyclic graph based on the delegation.

Example 3I. The system of any of examples 11-21, where to output the corresponding data, the processing circuitry is configured to output a Resource Reservation Protocol (RSVP) Path message that includes the corresponding data directly to the node.

Example 4I. The system of any of examples 11-31, where to output the corresponding data, the processing circuitry is configured to output a protocol message directly to the node, the protocol message including the data according to a data model.

Example 5I. The system of any of examples 11-31, where to output the corresponding data, the processing circuitry is configured to output a Path Computation Element Communication Protocol (PCEP) message directly to the node, the PCEP message including the data.

Example 6I. The system of any of examples 11-51, wherein to apply the max flow algorithm to the directed acyclic graph the processing circuitry is configured to apply, based at least on respective available bandwidths of links corresponding to the edges of the directed acyclic graph, the max flow algorithm to the directed acyclic graph.

Example 1J. A computer-readable storage medium comprising instructions for configuring the one or more processors of any of the systems of examples 1-28, nodes of 1A-8A, systems of 1B-3B, nodes of 1G-3G, systems of 1H-8H, or systems of 1I-6I.

Example 1K. A method comprising: steps performed by executing the instructions as in any of the systems of examples 1-28, nodes of 1A-8A, systems of 1B-3B, nodes of 1G-3G, systems of 1H-8H, or systems of 11-61.

For processes, apparatuses, and other examples or illustrations described herein, including in any flowcharts or flow diagrams, certain operations, acts, steps, or events included in any of the techniques described herein can be performed in a different sequence, may be added, merged, or left out altogether (e.g., not all described acts or events are necessary for the practice of the techniques). Moreover, in certain examples, operations, acts, steps, or events may be performed concurrently, e.g., through multi-threaded processing, interrupt processing, or multiple processors, rather than sequentially. Further certain operations, acts, steps, or events may be performed automatically even if not specifically identified as being performed automatically. Also, certain operations, acts, steps, or events described as being performed automatically may be alternatively not performed automatically, but rather, such operations, acts, steps, or events may be, in some examples, performed in response to input or another event.

The detailed description set forth below, in connection with the appended drawings, is intended as a description of various configurations and is not intended to represent the only configurations in which the concepts described herein may be practiced. The detailed description includes specific details for the purpose of providing a thorough understanding of the various concepts. However, it will be apparent to those skilled in the art that these concepts may be practiced without these specific details. In some instances, well-known structures and components are shown in block diagram form in order to avoid obscuring such concepts.

In accordance with one or more aspects of this disclosure, the term "or" may be interrupted as "and/or" where context does not dictate otherwise. Additionally, while phrases such as "one or more" or "at least one" or the like may have been used in some instances but not others; those instances where such language was not used may be interpreted to have such a meaning implied where context does not dictate otherwise.

The techniques described herein may be implemented in hardware, software, firmware, or any combination thereof. Various features described as modules, units or components may be implemented together in an integrated logic device or separately as discrete but interoperable logic devices or other hardware devices. In some cases, various features of electronic circuitry may be implemented as one or more integrated circuit devices, such as an integrated circuit chip or chipset.

If implemented in hardware, this disclosure may be directed to an apparatus such as a processor or an integrated circuit device, such as an integrated circuit chip or chipset. Alternatively or additionally, if implemented in software or firmware, the techniques may be realized at least in part by a computer-readable medium comprising instructions that, when executed, cause a processor to perform one or more of the methods described above. For example, the computer-readable medium may store and/or convey such instructions for execution by a processor.

A computer-readable medium may form part of a computer program product, which may include packaging materials. A computer-readable medium may comprise a computer data storage medium such as random-access memory (RAM), read-only memory (ROM), non-volatile random-access memory (NVRAM), electrically erasable programmable read-only memory (EEPROM), Flash memory, magnetic or optical data storage media, and the like. In some examples, an article of manufacture may comprise one or more computer-readable storage media.

In some examples, the computer-readable storage media may comprise non-transitory media. The term "non-transitory" may indicate that the storage medium is not embodied in a carrier wave or a propagated signal. In certain examples, a non-transitory storage medium may store data that can, over time, change (e.g., in RAM or cache).

A computer-readable medium may also or alternatively be a transmission medium by which instructions may be conveyed. A computer-readable transmission medium may include carrier waves, transmission signals or the like. A computer-readable transmission medium may convey instructions between components of a single computer system and/or between plural separate computer systems.

The code or instructions may be software and/or firmware executed by processing circuitry including one or more processors, such as one or more digital signal processors (DSPs), general purpose microprocessors, application-specific integrated circuits (ASICs), field-programmable gate arrays (FPGAs), or other equivalent integrated or discrete logic circuitry. Accordingly, the term "processor," as used herein may refer to any of the foregoing structure or any other structure suitable for implementation of the techniques described herein. In addition, in some aspects, functionality described in this disclosure may be provided within software modules or hardware modules.

## Claims

1. A system comprising:
computer-readable storage media storing instructions; and
processing circuitry having access to the computer-readable storage media and configured to execute the instructions to:
compute, for a network of nodes interconnected by one or more links, a directed acyclic graph, wherein edges of the directed acyclic graph correspond to links of the one or more links that make up paths from an ingress node of the nodes to an egress node of the nodes;
apply a max flow algorithm to the directed acyclic graph to determine a share of outgoing bandwidth for a first link and a share of outgoing bandwidth for a second link, wherein the first link and the second link are of the links corresponding to the edges of the directed acyclic graph; and
output data indicating the share of outgoing bandwidth for the first link and the share of outgoing bandwidth for the second link, wherein the data causes a particular node to forward network traffic received at the particular node according to the share of outgoing bandwidth for the first link and the share of outgoing bandwidth for the second link.

2. The system of claim 1, wherein the data indicating the share of outgoing bandwidth for the first link and the share of outgoing bandwidth for the second link comprises data indicating a ratio of the first link to the second link.

3. The system of any of claims 1-2, wherein the network traffic received at the particular node is for a traffic trunk transported by a multipath traffic engineering directed acyclic graph based on the directed acyclic graph.

4. The system of any of claims 1-3,
wherein the particular node is a first particular node, and
wherein the processing circuitry is configured to execute the instructions to:
apply the max flow algorithm to the directed acyclic graph to determine a share of outgoing bandwidth for a third link of the links corresponding to the edges of the directed acyclic graph; and
output, to a second particular node of the nodes, data indicating the share of outgoing bandwidth for the third link to cause the second particular node to forward network traffic received at the second particular node according to the share of outgoing bandwidth for the third link.

5. The system of any of claims 1-4, wherein the data further indicates a bandwidth of the network traffic to be received by the particular node and that is to be forwarded via the first link and the second link according to the share of outgoing bandwidth for the first link and the share of outgoing bandwidth for the second link.

6. The system of any of claims 1-5, wherein the data further identifies a multipath traffic engineering directed acyclic graph.

7. The system of any of claims 1-6, wherein the processing circuitry is configured to execute the instructions to output the data in a message that indicates, for the particular node:
one or more previous hop nodes and at least one outgoing interface for each of the one or more previous hop nodes to indicate the first incoming link and the second incoming link; and
one or more next hop outgoing interfaces and, for each of the one or more next hop outgoing interfaces, an indication of the corresponding share of outgoing bandwidth.

8. The system of claim 7, wherein the message causes the particular node to send a corresponding message with a label to each of the one or more previous hop nodes.

9. The system of any of claims 1-8, wherein to apply the max flow algorithm to the directed acyclic graph the processing circuitry is configured to execute the instructions to apply, based at least on respective available bandwidths of the first link and the second link of the links corresponding to the edges of the directed acyclic graph, the max flow algorithm to the directed acyclic graph.

10. The system of any of claims 1-9, wherein each of the first link and the second link is an outgoing link of the particular node.

11. The system of any of claims 1-10, wherein the system comprises a path computation element or the ingress node.

12. The system of any of claims 1-11, further comprising:
based on an indication the first link is unable to transport packets, output updated data indicating the share of outgoing bandwidth for the first link is 0.

13. A network node comprising:
computer-readable storage media storing instructions; and
processing circuitry having access to the computer-readable storage media and configured to execute the instructions to:
obtain data associating a first incoming link, a second incoming link, a share of outgoing bandwidth for a first outgoing link, and a share of outgoing bandwidth for a second outgoing link; and
forward, based on the data, incoming network traffic received on the first incoming link and incoming network traffic received on the second incoming link via the first outgoing link according to the share of outgoing bandwidth for the first outgoing link and via the second outgoing link according to the share of outgoing bandwidth for the second outgoing link.

14. Computer-readable media comprising instructions that, when executed by one or more programmable processors, cause the one or more programmable processors to perform the steps carried out by the system of any of claims 1-12.

15. Computer-readable media comprising instructions that, when executed by one or more programmable processors, cause the one or more programmable processors to perform the steps carried out by the network node of claim 13.
